# EUROPEAN PATENT SPECIFICATION

(11) **EP 4 301 826 B1**
(45) Date of publication and mention of the grant of the patent: **03.06.2026**
(21) Application number: 22709773.0
(22) Date of filing: 02.03.2022
(51) Int. Cl.: C09K 5/06

(54) **SUB-ZERO PHASE CHANGE MATERIALS WITH MULTIPLE CRYSTALLISATION EVENTS**
MATERIALIEN MIT UNTER NULL PHASENUMWANDLUNG MIT MEHREREN KRISTALLISATIONSEREIGNISSEN
MATÉRIAUX À CHANGEMENT DE PHASE À BASSE TEMPÉRATURE, COMPORTANT PLUSIEURS ÉVÉNEMENTS DE CRISTALLISATION

(30) Priority: 02.03.2021 GB 202102248; 09.08.2021 GB 202111449
(43) Date of publication of application: 10.01.2024
(73) Proprietor: Sunamp Limited, Macmerry East Lothian EH33 1RY (GB)
(72) Inventor: ODLING, Gylen, Macmerry East Lothian EH33 1RY (GB); FISHER, Kate, Macmerry East Lothian EH33 1RY (GB); OLIVER, David, Macmerry East Lothian EH33 1RY (GB); BISSELL, Andrew, Macmerry East Lothian EH33 1RY (GB)
(74) Representative: HGF
(86) International application number: PCT/GB2022/050541
(87) International publication number: WO 2022/185046

(56) References cited:
- AU-A4- 2020 101 016
- AU-A4- 2020 103 697
- CN-A- 105 950 120
- CN-A- 106 928 904
- CN-A- 110 105 924
- US-A- 4 595 516

## Description

### FIELD OF THE INVENTION

The invention relates to thermal energy storage, specifically thermal energy storage at temperatures below 0 °C. More specifically, the invention relates to the use of inorganic phase change materials (PCMs) as cold storage media and the nucleation thereof.

### BACKGROUND OF THE INVENTION

Cooling systems lack thermal inertia and thermal mass. O0d inertia to the system. However, these systems are undesirable because they have high heat gains from ambient (low efficiency), high purchasing and maintenance costs and low energy density. Such systems require the use of chillers, which use a refrigerant to remove heat from the water-glycol circuit via a heat exchanger, and this is a significant cause of low efficiency.

The use of phase-change materials (PCMs) to store thermal energy is a high energy density alternative to water/glycol tanks. Such materials store energy using the latent heat of a phase change (i.e. solid-liquid, solid-gas, liquid-gas), including polymorphic changes (i.e. solid-solid).

Materials which exhibit phase changes below zero may be organic in nature (i.e. carbon based) or inorganic salt-water eutectics. Compared to organics, inorganic PCMs are typically cheaper, have lower flammability/combustibility and may have higher energy density. However, they exhibit subcooling, a phenomenon where a material which will remain liquid below its thermodynamic phase change temperature and therefore require nucleation aids or extreme low temperatures to initiate crystallisation.

It is an object of at least one aspect of the present invention to obviate or at least mitigate one more of the aforementioned problems.

It is an object of at least one aspect of the present invention to provide a sub-zero phase change material with multiple crystallisation events.

It is an object of at least one aspect of the present invention to provide a sub-zero phase change material with one or more nucleation agents that act to reduce subcooling in one of the crystallisation events specifically.

It is a further object of at least one aspect of the present invention to provide an improved phase change material for cold storage media.

It is a further object of at least one aspect of the present invention to provide a sub-zero phase change material with one or more nucleation agents chosen to reduce subcooling in one crystallisation event, combined with one or more other nucleation agents chosen to reduce subcooling in the other crystallisation event.

It is a benefit of the present invention that the PCM undergoes both crystallisation processes with minimal cooling below the thermodynamic phase transition temperature (i.e. the temperature at which the phase transition could occur with no subcooling).

It is a benefit of the present invention that the PCM may be frozen with a minimum of cooling power, i.e. is frozen at high temperature.

It is a benefit of the present invention that the PCM undergoes both crystallisation phase transitions at a temperature close to (e.g. between 0 and 20 °C below) the thermodynamic phase transition temperature.

### SUMMARY OF THE INVENTION

The invention is defined by the appended claims.

According to a first aspect of the present invention there is provided a phase change material (PCM) with a melting point below 0 °C which exhibits two crystallisation events on cooling, comprised of:
at least one salt;
water; and
   one or more nucleation agent(s) which act to reduce subcooling in the first crystallisation event, and/or,
   one or more nucleation agent(s) which act to reduce subcooling in the second crystallisation event;
wherein the at least one salt comprises a 1 + halide; the one or more nucleation agent(s) for the first crystallisation event is selected from calcium carbonate, silicon dioxide, aluminium oxide, iron oxide and silver iodide; and the one or more nucleation agent(s) for the second crystallisation event is selected from silicon carbide and phyllosilicate materials; or
wherein the at least one salt comprises a 2+ halide; the one or more nucleation agent(s) for the first crystallisation event is selected from calcium carbonate, silicon dioxide, aluminium oxide, iron oxide and titanium dioxide; and, the one or more nucleation agent(s) for the second crystallisation event is selected from silicon carbide, vermiculite and silver iodide; or
wherein the at least one salt comprises a sulfate; the one or more nucleation agent(s) for the first crystallisation event is selected from silicon dioxide, aluminium oxide, iron oxide and titanium dioxide; and, the one or more nucleation agent(s) for the second crystallisation event is selected from silicon carbide and calcium carbonate; or
wherein the at least one salt comprises a nitrate; the one or more nucleation agent(s) for the first crystallisation event is selected from calcium carbonate, silicon dioxide, aluminium oxide, iron oxide and titanium dioxide; and the one or more nucleation agent(s) for the second crystallisation event is selected from silicon carbide, vermiculite and silver iodide; or
wherein the at least one salt comprises a carboxylate the one or more nucleation agent(s) for the first crystallisation event is selected from calcium carbonate, silicon dioxide, aluminium oxide and iron oxide; and, the one or more nucleation agent(s) for the second crystallisation event is selected from silicon carbide, vermiculite, silver iodide and titanium dioxide.

The compositions of PCMsdisclosed herein may exhibit multiple crystallisation events on cooling.

The least one salt comprises a sulfate. The salt(s) may also comprise:
at least one or a combination of cations selected from:
   Lithium;
   Sodium;
   Potassium;
   Calcium;
   Magnesium;
   Strontium; and/or
   Ammonium;
and at least one or a combination of anions selected from:
   any halide;
   Chloride;
   Bromide;
   Sulfate;
   Nitrate;
   Formate; and/or
   Acetate;.

The PCM according to the invention may comprise one or more salt(s) selected from any one of or combination of the following:
Between 0 and 10 wt.% sodium sulfate;
Between 0 and 30 wt.% magnesium sulfate;
Between 0 and 40 wt.% magnesium nitrate;
Between 0 and 50 wt.% sodium nitrate;
Between 0 and 35 wt.% lithium nitrate;
Between 0 and 30 wt.% strontium chloride;
Between 0 and 50 wt.% strontium bromide;
Between 0 and 50 wt.% sodium bromide;
Between 0 and 25 wt.% sodium chloride;
Between 0 and 25 wt.% ammonium chloride;
Between 0 and 30 wt.% potassium chloride;
Between 0 and 15 wt.% sodium-potassium tartrate;
Between 0 and 40 wt.% sodium acetate, and/or
Between 0 and 35 wt. sodium formate,
with the remainder of each composition being water.

The PCM according to the invention may comprise one or more nucleation agent(s) selected from one or more of:
Between 3 and 6 wt.% sodium sulfate;
Between 14 and 25 wt.% magnesium sulfate;
Between 25 and 35 wt.% magnesium nitrate;
Between 30 and 40 wt.% sodium nitrate;
Between 20 and 30 wt.% lithium nitrate;
Between 15 and 25 wt.% strontium chloride;
Between 35 and 46 wt.% strontium bromide;
Between 34 and 45 wt.% sodium bromide;
Between 15 and 25 wt.% sodium chloride;
Between 14 and 25 wt.% ammonium chloride;
Between 15 and 25 wt.% potassium chloride;
Between 5 and 15 wt.% sodium-potassium tartrate;
Between 18 and 30 wt.% sodium acetate, and/or
Between 19 and 30 wt.% sodium formate,
with the remainder of each composition being water.

The PCM may comprise one or more salt(s) selected from one or more of:
About 4 wt.% sodium sulfate;
About 19 wt.% magnesium sulfate;
About 20 wt.% potassium chloride;
About 19 wt.% ammonium chloride;
About 24 wt.% sodium formate;
About 20 wt.% strontium chloride;
About 35 wt.% sodium nitrate;
About 23 wt.% sodium acetate;
About 27 wt.% sodium acetate;
About 22 wt.% sodium chloride;
About 25 wt.% lithium nitrate;
About 39 wt.% sodium bromide;
About 41 wt.% strontium bromide, or
About 30 wt.% magnesium nitrate,
with the remainder of each composition being water.

It is a preferred embodiment of the present invention that the PCM comprises one or more salts of group I and/or group II metals.

It is a preferred embodiment of the present invention that the PCM comprises one or more lithium, sodium, potassium, magnesium, calcium, strontium and/or ammonium salts.

Herein it is defined that the first and second crystallisation events are defined by the order in which they occur chronologically as the PCM is cooled from its liquid state.

The nucleation agent may act to induce nucleation of the first crystallisation transition.

The nucleation agent may act to induce nucleation in the second crystallisation transition.

A plurality of nucleation agents may be used to nucleate both crystallisation events.

The present invention uses two or more nucleation agents, with at least one acting to reduce subcooling in the first crystallisation event and at least one acting to reduce subcooling in the second crystallisation event.

A plurality of nucleation agents may be used to nucleate both crystallisation events.

In particular embodiments of the invention on cooling nucleation at higher temperature precedes nucleation at a low temperature.

One of the crystallisation events may be a solid-solid or polymorphic phase transition.

The first crystallisation event may nucleates at a temperature between 0 and about 10 °C, between 0 and about 5 °C, or between 0 and about 3 °C below the melting temperature of the PCM; or wherein, on cooling, the second crystallisation event nucleates at a temperature between 0 °C and about 20 °C, between 0 and about 10 °C, or between 0 and about 5 °C below the melting temperature of the PCM;

On cooling, the first crystallisation event may nucleate at a temperature between 0 °C and about 10 °C below the melting temperature of the PCM, followed by nucleation of the second crystallisation event at a temperature below about 3 °C below the melting temperature of the PCM. where the PCM volume is more than 1L, more than 10 L, more than 20L, more than 100L, more than 200L, or more than 1000L.

Aluminium oxide may be used as a nucleation agent for the first crystallisation event, and the salt is selected from a group comprising any one of or combination of the following:
Magnesium sulfate
Potassium chloride
Ammonium chloride
Strontium chloride
Sodium chloride
Sodium bromide; and
Magnesium nitrate.

Calcium carbonate may be used as a nucleation agent for the first crystallisation event, and the salt may be selected from a group comprising any one of or combination of the following:
Sodium potassium tartrate
Ammonium chloride
Sodium nitrate
Sodium formate
Sodium acetate
Sodium chloride
Sodium bromide; and
Strontium bromide.

Silicon dioxide may be used as a nucleation agent for the first crystallisation event, and the salt may be selected from a group comprising any one of or combination of the following:
Sodium acetate and
Magnesium nitrate.

Silver iodide may be used as a nucleation agent for the first crystallisation event, and the salt may be selected from a group comprising any one of or combination of the following:
Ammonium chloride; and
Sodium bromide.

Titanium dioxide may be used as a nucleation agent for the first crystallisation event, and the salt may be magnesium sulfate.

Iron oxide may be used as a nucleation agent for the first crystallisation event, and the salt may be selected from a group comprising any one of or combination of the following:
Sodium nitrate
Sodium acetate; and
Lithium nitrate.

Silicon carbide may be used as a nucleation agent for the second crystallisation event, and the salt My be selected from a group comprising any one of or combination of the following:
Sodium sulfate
Sodium potassium tartrate
Magnesium sulfate
Ammonium chloride
Sodium formate
Strontium chloride
Sodium nitrate
Sodium acetate
Sodium chloride
Lithium nitrate
Sodium bromide; and
Magnesium nitrate.

Silver iodide may be used as a nucleation agent for the second crystallisation event, and the salt may be selected from a group comprising any one of or combination of the following:
Sodium formate
Sodium nitrate
Strontium chloride; and
Strontium bromide.

Vermiculite may be used as a nucleation agent for the second crystallisation event, and the salt may be selected from a group comprising any one of or combination of the following:
Potassium chloride
Ammonium chloride
Sodium formate
Strontium chloride
Sodium nitrate
Sodium acetate
Sodium chloride
Lithium nitrate
Sodium bromide; and
Magnesium nitrate.

Calcium carbonate may be used as a nucleation agent for the second crystallisation event, and the salt may be magnesium sulfate.

The nucleation agent may be present at a loading of at least 0.01 wt.%, at least 0.1 wt.%, at least 1 wt.%, at least 5 wt.%, at least 10 wt.%, or at least 20 wt.%.

The nucleation agent may be present at a loading of about 0.5 wt.%.

The nucleation agent may be present at a loading greater than the solubility limit of the nucleation agent in the salt solution.

The PCM may comprise about 15-25 wt.% ammonium chloride in water, with the nucleation agent for the first crystallisation event comprising about 0.1-1.0 wt.% silver iodide and the nucleation agent for the second crystallisation event comprising about 0.1-1.0 wt.% vermiculite and/or silicon carbide. Optionally the PCM may comprise about 18.6 wt.% ammonium chloride in water, with the nucleation agent for the first crystallisation event comprising about 0.5 wt.% silver iodide and the nucleation agent for the second crystallisation event comprising about 0.5 wt.% vermiculite and/or silicon carbide.

The PCM may comprise about 18-30 wt.% sodium formate in water, with the nucleation agent for the first crystallisation event comprising about 0.1-1.0 wt.% calcium carbonate and the nucleation agent for the second crystallisation event comprising about 0.1-1.0 wt.% vermiculite. Optionally the PCM may comprise about 24 wt.% sodium formate in water, with the nucleation agent for the first crystallisation event comprising about 0.5 wt.% calcium carbonate and the nucleation agent for the second crystallisation event comprising about 0.5 wt.% vermiculite.

The PCM may comprise about 15-25 wt.% strontium chloride in water, with the nucleation agent for the first crystallisation event comprising about 0.1-1.0 wt.% aluminium oxide and the nucleation agent for the second crystallisation event comprising about 0.1-1.0 wt.% vermiculite and/or silver iodide. Optionally the PCM may comprise about 19.5 wt.% strontium chloride in water, with the nucleation agent for the first crystallisation event comprising about 0.5 wt.% aluminium oxide and the nucleation agent for the second crystallisation event comprising about 0.5 wt.% vermiculite and/or silver iodide.

The PCM may comprise about 30-40 wt.% sodium nitrate in water, with the nucleation agent for the first crystallisation event comprising about 0.1-1.0 wt.% iron oxide and/or silica and the nucleation agent for the second crystallisation event comprising about 0.1-1.0 wt.% vermiculite. Optionally the PCM may comprise about 35 wt.% sodium nitrate in water, with the nucleation agent for the first crystallisation event comprising about 0.5 wt.% iron oxide and/or silica and the nucleation agent for the second crystallisation event comprising about 0.5 wt.% vermiculite.

The PCM may comprise about 15- 30 wt.% sodium acetate in water, with the nucleation agent for the first crystallisation event comprising about 0.1-1.0 wt.% calcium carbonate and the nucleation agent for the second crystallisation event comprising about 0.1-1.0 wt.% silver iodide. Optionally the PCM may comprise about 22.7 wt.% sodium acetate in water, with the nucleation agent for the first crystallisation event comprising about 0.5 wt.% calcium carbonate and the nucleation agent for the second crystallisation event comprising about 0.5 wt.% silver iodide.

The PCM may comprise about 22-33.0 wt.% sodium acetate in water, with the nucleation agent for the first crystallisation event comprising about 0.1-1.0 wt.% calcium carbonate and the nucleation agent for the second crystallisation event comprising about 0.1-1.0 wt.% silver iodide. Optionally the PCM may comprise about 27.0 wt.% sodium acetate in water, with the nucleation agent for the first crystallisation event comprising about 0.5 wt.% calcium carbonate and the nucleation agent for the second crystallisation event comprising about 0.5 wt.% silver iodide.

The PCM may comprise about 18-27 wt.% sodium chloride in water, with the nucleation agent for the first crystallisation event comprising about 0.1-1.0 wt.% calcium carbonate and the nucleation agent for the second crystallisation event comprising about 0.1-1.0 wt.% vermiculite and/or silicon carbide. Optionally the PCM may comprise about 22.4 wt.% sodium chloride in water, with the nucleation agent for the first crystallisation event comprising about 0.5 wt.% calcium carbonate and the nucleation agent for the second crystallisation event comprising about 0.5 wt.% vermiculite and/or silicon carbide.

The PCM may comprise about 19-30 wt.% lithium nitrate in water, with the nucleation agent for the first crystallisation event comprising about 0.1-1.0 wt.% iron oxide and the nucleation agent for the second crystallisation event comprising about 0.1-1.0 wt.% silicon carbide. Optionally the PCM may comprise about 24.5 wt.% lithium nitrate in water, with the nucleation agent for the first crystallisation event comprising about 0.5 wt.% iron oxide and the nucleation agent for the second crystallisation event comprising about 0.5 wt.% silicon carbide.

The PCM may comprise about 34-45 wt.% sodium bromide in water, with the nucleation agent for the first crystallisation event comprising about 0.1-1.0 wt.% calcium carbonate and the nucleation agent for the second crystallisation event comprising about 0.1-1.0 wt.% silicon carbide. Optionally, the PCM may comprise about 39 wt.% sodium bromide in water, with the nucleation agent for the first crystallisation event comprising about 0.5 wt.% calcium carbonate and the nucleation agent for the second crystallisation event comprising about 0.5 wt.% silicon carbide.

The PCM may comprise about 35-45 wt.% strontium bromide in water, with the nucleation agent for the first crystallisation event comprising about 0.1-1.0 wt.% calcium carbonate and the nucleation agent for the second crystallisation event comprising about 0.1-1.0 wt.% silver iodide. Optionally the PCM may comprise about 41 wt.% strontium bromide in water, with the nucleation agent for the first crystallisation event comprising about 0.5 wt.% calcium carbonate and the nucleation agent for the second crystallisation event comprising about 0.5 wt.% silver iodide.

The PCM may comprise about 25-35 wt.% magnesium nitrate in water, with the nucleation agent for the first crystallisation event comprising about 0.1-1.0 wt.% silicon dioxide and/or aluminium oxide and the nucleation agent for the second crystallisation event comprising about 0.1-1.0 wt.% silicon carbide. Optionally the PCM may comprise about 30 wt.% magnesium nitrate in water, with the nucleation agent for the first crystallisation event comprising about 0.5 wt.% silicon dioxide and/or aluminium oxide and the nucleation agent for the second crystallisation event comprising about 0.5 wt.% silicon carbide.

When PCM according to the first aspect is used, the PCM is retained in a solid state after its first crystallisation event before the second crystallisation event occurs. The second crystallisation event can be considered to be a solid-solid phase transition.

The nucleation agent materials disclosed herein act to reduce subcooling in one of the crystallisation events exhibited by salt-water eutectic PCMs.

Herein is disclosed that further to subcooling, salt-water eutectics often crystallise at two stages and at two different temperatures.

It is also disclosed herein that the two or at least two crystallisation events in salt-water eutectic PCMs may have distinctly different thermal energies. Control over these two or at least two crystallisation events, including nucleation and crystal growth are highly advantageous towards producing a sub-zero PCM with reliable cyclability, taking advantage of the full thermal capacity of the material.

It is a preferred embodiment of the present invention to use silicon carbide, phyllosilicate materials (e.g. vermiculite, talc or mica) and combinations thereof as nucleation agents to nucleate the second crystallisation event of a salt-water eutectic PCM.

In addition, the application of said control of crystallisation to the operation of a thermal storage device is described.

### BRIEF DESCRIPTION OF THE DRAWINGS

Embodiments of the present invention will now be described, by way of example only, with reference to the following Figures:
Figure 1 shows the temperature profile of a PCM undergoing a double crystallisation event on cooling according to an embodiment of the present invention;
Figure 2 shows example thermal data of a PCM (Lithium nitrate-water eutectic) which undergoes a double crystallisation event on cooling according to an embodiment of the present invention;
Figure 3 shows example thermal data of the disodium adipate-water eutectic where only the one crystallisation event occurs and the subsequent effect of this upon the melting transition according to an embodiment of the present invention;
Figure 4 shows example thermal data of the disodium adipate-water eutectic where both the first and second crystallisation events occur and the subsequent effect of this upon the melting transition according to an embodiment of the present invention;
Figure 5 shows thermal data of the sodium acetate-water eutectic where the PCM reaches a higher temperature after the first crystallisation event than the second crystallisation event according to an embodiment of the present invention;
Figure 6 shows thermal data of the sodium sulfate-water eutectic where the PCM reaches the same temperature after both the first and second crystallisation events, as well as an example of the second crystallisation event initiating at a temperature higher than the first according to an embodiment of the present invention;
Figure 7 shows thermal data of a material with no known hydrates (KCI) in a eutectic composition with water exhibiting two crystallisation events according to an embodiment of the present invention;
Figure 8 shows thermal data of a material with a plurality of known hydrates (CaCl₂) in a eutectic composition with water exhibiting two crystallisation events according to an embodiment of the present invention;
Figure 9 shows a comparison of the magnesium nitrate-water eutectic with and without a SiC nucleation agent according to an embodiment of the present invention;
Figure 10 shows thermal data of the double nucleation of the magnesium nitrate-water eutectic without any nucleation agent according to an embodiment of the present invention;
Figure 11 shows thermal data of the double nucleation of the magnesium nitrate-water eutectic with a ceramic SiO₂/Al₂O₃ nucleation agent according to an embodiment of the present invention;
Figure 12 shows thermal data of two crystallisation events in the ammonium chloride-water eutectic merging on addition of an ice nucleating protein according to an embodiment of the present invention; and
Figure 13 shows images of a sub-zero PCM after its first crystallisation event in the process of its second crystallisation event, points 1 and 2 denote areas of PCM after one and two crystallisation events respectively;
Figure 14 shows a double crystallisation event regime in a large (17 litre) sample of a sub-zero salt-water eutectic PCM comprising sodium acetate and water;
Figure 15 shows a double crystallisation event regime in a large (100 litre) sample of a sub-zero salt-water eutectic PCM comprising magnesium sulfate and water;
Figure 16 shows the extent of subcooling of both the first and second crystallisation events in a eutectic of magnesium sulfate and water without any nucleation agent(s);
Figure 17 shows the extent of subcooling of both the first and second crystallisation events in a eutectic of magnesium suflate and water with calcium carbonate acting as a nucleation agent for the first crystallisation event and silver iodide acting as a nucleation agent for the second crystallisation event;
Figure 18 shows an example thermal cycle of a samples of a magnesium sulfate-water eutectic PCM comprising a titanium dioxide nucleation agent and no nucleation agent;
Figure 19 shows an example thermal cycle of samples of a magnesium sulfate-water eutectic PCM comprising aluminium oxide and no nucleation agent;
Figure 20 shows an example thermal cycle of samples of a magnesium sulfate-water eutectic PCM comprising silicon carbide and no nucleation agent;
Figure 21 shows an example thermal cycle of samples of a sodium bromide-water eutectic PCM comprising aluminium oxide and no nucleation agent;
Figure 22 shows an example thermal cycle of samples of a sodium bromide-water eutectic PCM comprising silicon dioxide and no nucleation agent;
Figure 23 shows an example thermal cycle of samples of a sodium bromide-water eutectic PCM comprising calcium carbonate and no nucleation agent;
Figure 24 shows an example thermal cycle of samples of a sodium bromide-water eutectic PCM comprising silver iodide and no nucleation agent;
Figure 25 shows cooling of a PCM comprising a sodium acetate-water eutectic with no nucleation agent in a 3-layer calorimetry set up;
Figure 26 shows cooling of a PCM comprising a sodium acetate-water eutectic with a silver iodide nucleation agent in a 3-layer calorimetry set up;
Figure 27 shows an example thermal cycle of samples of a strontium bromide-water eutectic PCM comprising silver iodide and no nucleation agent;
Figure 28 shows an example thermal cycle of samples of a potassium chloride-water eutectic PCM comprising silver iodide and no nucleation agent;
Figure 29 shows an example thermal cycle of samples of an ammonium chloride-water eutectic PCM comprising silver iodide and no nucleation agent;

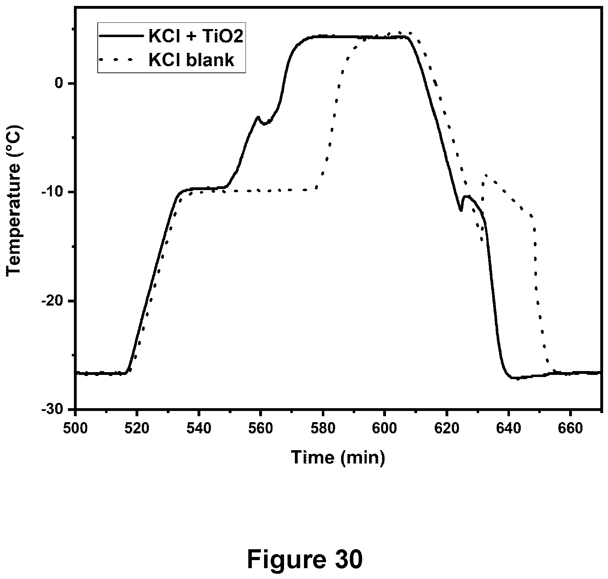

Figure 30 shows the effect of adding titanium dioxide to a KCl-water salt-water eutectic PCM, with an improvement to the first crystallisation event; and

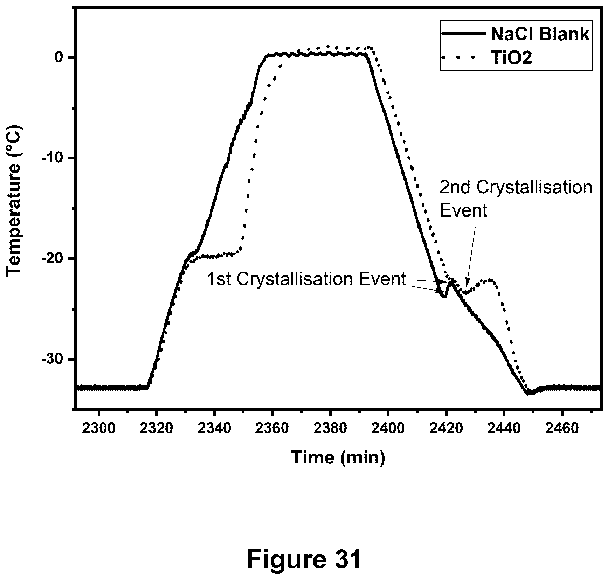

Figure 31 shows changing the cation of the salt to sodium however gives reversed performance, with the addition of titanium dioxide improving the nucleation of the second crystallisation event;
Figure 32 shows the use of Agl to improve the first crystallisation event of a PCM comprising a magnesium sulfate-water eutectic;
Figure 33 shows the use of Agl and SiC to improve the first and second crystallisation events of a PCM comprising a sodium sulfate-water eutectic;
Figure 34 shows the two stage crystallisation of a PCM comprising a lithium sulfate-water eutectic (i.e. approx. 25 wt.% lithium sulfate in water) without any nucleation agent;
Figure 35 shows improved nucleation of the first crystallisation event of a potassium chloride-water eutectic when modified with calcium carbonate;
Figure 36 shows vermiculite allowing the second crystallisation event to occur in an ammonium chloride-water eutectic compared to a blank;
Figure 37 shows the presence of calcium carbonate improving the crystallisation of the first crystallisation event of a eutectic of NH4Cl and water;
Figure 38 shows the improvement to the first crystallisation event of a eutectic of sodium acetate and water due to the presence of iron oxide;
Figure 39 shows the improvement to the first crystallisation event of a eutectic of sodium acetate and water due to the presence of calcium carbonate;
Figure 40 shows the improvement of the second crystallisation event of a eutectic of sodium formate and water due to the presence of vermiculite;
Figure 41 shows the improvement of the second crystallisation event of a eutectic of sodium formate and water due to the presence of silicon carbide;
Figure 42 shows the crystallisation of a eutectic of sodium formate and water without any nucleation agent;
Figure 43 shows the crystallisation of a eutectic of sodium formate and water with a silver iodide nucleation agent;
Figure 44 shows improvements to the second crystallisation event of a PCM comprising a strontium chloride-water eutectic in the presence of silicon carbide and silver iodide;
Figure 45 shows improvements to the first crystallisation event of a PCM comprising a strontium chloride-water eutectic in the presence of aluminium oxide;
Figure 46 shows improvements to the first crystallisation event of a PCM comprising a sodium nitrate-water eutectic in the presence of calcium carbonate;
Figure 47 shows improvements to the first crystallisation event of a PCM comprising a sodium chloride-water eutectic in the presence of calcium carbonate;
Figure 48 shows improvements to the second crystallisation event of a PCM comprising a sodium chloride-water eutectic in the presence of vermiculite;
Figure 49 shows improvements to the first crystallisation event of a PCM comprising a lithium nitrate-water eutectic in the presence of iron oxide;
Figure 50 shows improvements to the second crystallisation event of a PCM comprising a lithium nitrate-water eutectic in the presence of silicon carbide;
Figure 51 shows improvements to the first crystallisation event of a PCM comprising a sodium bromide-water eutectic in the presence of alumina;
Figure 52 shows improvements to the first crystallisation event of a PCM comprising a strontium bromide-water eutectic in the presence of calcium carbonate;
Figure 53 shows the freezing profile of a PCM comprising Rochelle's salt and water;
Figure 54 shows the freezing profile of a PCM comprising Rochelle's salt, water and calcium carbonate;
Figure 55 shows improvements to the second crystallisation event of a PCM comprising a magnesium sulfate-water eutectic in the presence of calcium carbonate;
Figure 56 shows improvements to the first crystallisation event of a PCM comprising a potassium chloride-water eutectic in the presence of calcium carbonate;
Figure 57 shows improvements to the first crystallisation event of a PCM comprising an ammonium chloride-water eutectic in the presence of aluminium oxide;
Figure 58 shows improvements to the second crystallisation event of a PCM comprising an ammonium chloride-water eutectic in the presence of silicon carbide;
Figure 59 shows improvements to the second crystallisation event of a PCM comprising a strontium chloride-water eutectic in the presence of vermiculite;
Figure 60 shows improvements to the second crystallisation event of a PCM comprising a sodium nitrate-water eutectic in the presence of vermiculite;
Figure 61 shows improvements to the second crystallisation event of a PCM comprising a sodium nitrate-water eutectic in the presence of aluminium oxide;
Figure 62 shows improvements to the first crystallisation event of a PCM comprising a sodium nitrate-water eutectic in the presence of iron oxide;
Figure 63 shows improvements to the first crystallisation event of a PCM comprising a sodium nitrate-water eutectic in the presence of silicon oxide;
Figure 64 shows improvements to the first crystallisation event of a PCM comprising a sodium acetate-water eutectic in the presence of calcium carbonate;
Figure 65 shows improvements to the first crystallisation event of a PCM comprising a sodium chloride-water eutectic in the presence of aluminium oxide;
Figure 66 shows improvements to the second crystallisation event of a PCM comprising a sodium chloride-water eutectic in the presence of silicon carbide;
Figure 67 shows TiO₂ triggering the second crystallisation event in a PCM comprising a lithium nitrate-water eutectic;
Figure 68 shows SiO₂ improving the second crystallisation event of a PCM comprising a lithium nitrate-water eutectic. Note - the anomaly denoted artefact is due to a nearby sample warming on crystallisation and is not due to the samples described in the figure; and
Figure 69 shows vermiculite improving the second crystallisation event of a PCM comprising a potassium chloride-water eutectic.

### DETAILED DESCRIPTION

The present invention relates to the use of inorganic phase change materials (PCMs) as cold storage media and the nucleation thereof.

Herein is disclosed a range of salt-water eutectics that have phase transition temperatures between about 0 and about -100 °C and exhibit a two-stage crystallisation event according to the appended claims.

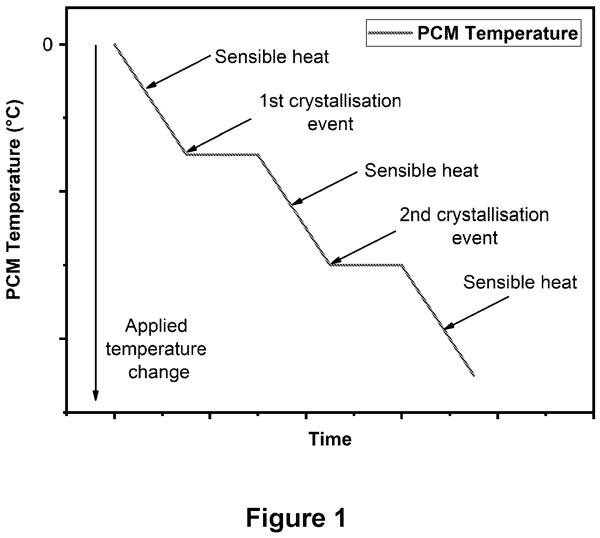

A two-stage crystallisation event is described pictorially in Figure 1. The PCM is shown to be cooled by an external source of cooling, causing the PCM's internal temperature to fall. Initially the PCM temperature falls according to the sensible heat of the PCM, until a certain temperature is reached. At this point the first crystallisation event occurs, releasing heat as the PCM crystallises. Once this first phase change is complete, the PCM temperature then begins to fall again according to the sensible heat of the material. At a second lower temperature, a further crystallisation event is observed, and heat is released once again. After this second nucleation/crystallisation stage, the PCM continues to cool according to its sensible heat.

Herein it is defined that the first and second crystallisation events are defined by the order in which they occur chronologically as the PCM is cooled from its liquid state.

However, experimentally several different potential regimes may be observed depending on the composition of the PCM.

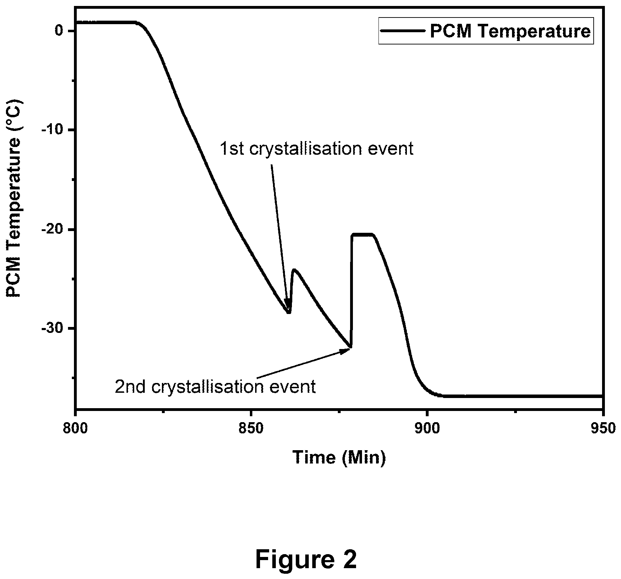

Figure 2 shows a typical double crystallisation plot of a lithium nitrate-water sub-zero PCM where subcooling is observed in both transitions. The lithium nitrate-water eutectic is disclosed to have a thermodynamic phase transition at about -21 °C, however on cooling the two crystallisation events are observed initiating at about -28 °C and about -32 °C, indicating subcooling. Hence this PCM without any additives would need to be cooled to about -32 °C for it to be fully crystallised, despite appearing solid after cooling to about -28 °C.

Subcooling may be more extreme than is noted in Figure 2, where the low temperature crystallisation event sub-cools to such an extent that only a single crystallisation event occurs within the temperature window used.

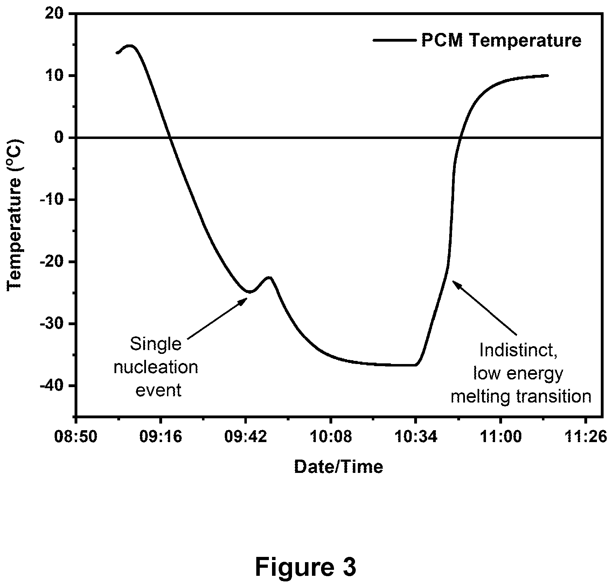

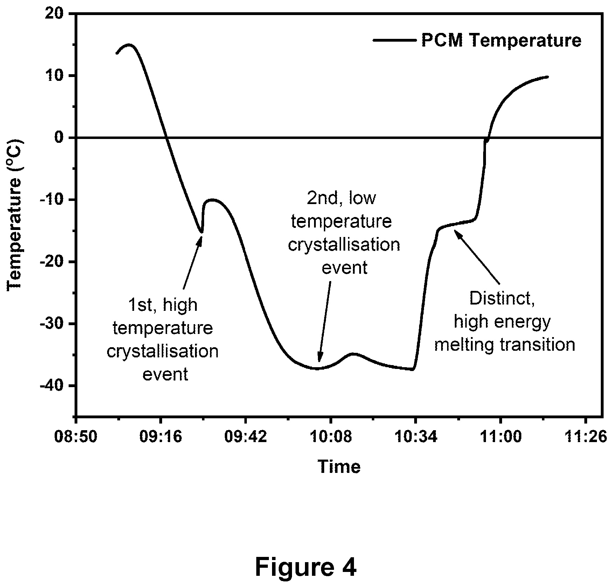

Figure 3 shows experimental data of a eutectic of disodium adipate and water which undergoes its first crystallisation event but not its second crystallisation event. This leads to incomplete freezing of the PCM, the result of which is that on warming the PCM only a very indistinct melting plateau is observed. In contrast, where this PCM undergoes both its crystallisation events (Figure 4), a distinct flat melting transition is observed at around -14 °C. Hence, it is key in the salt-water eutectic PCMs disclosed herein that both the first and second crystallisation events occur and thereby achieve maximum energy storage at a single, well-defined temperature.

Furthermore, the maximum output temperature of a sub-zero PCM with multiple nucleation events may be weighted more towards the crystallisation process initiated by the first or second crystallisation events.

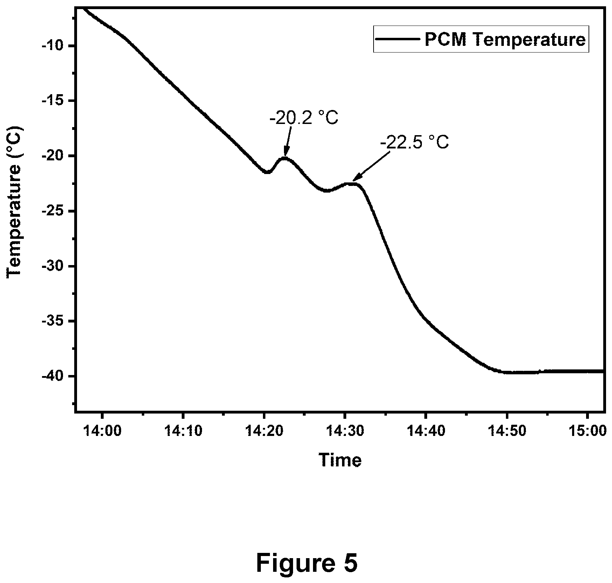

For example, Figure 2 shows that the thermodynamic maximum freezing temperature of about -21 °C is reached after the second crystallisation event for the lithium nitrate-water eutectic, whereas Figure 5 shows that the sodium acetate-water eutectic that has a thermodynamic phase transition temperature of about -20 °C only reaches this temperature after the first crystallisation event and not the second one. Without wishing to be bound by any particular theory, this effect is suggested to be due to a combination of sub-cooling and crystal growth rate.

Another eventuality is that both crystallisation stages produce the same output temperature after each crystallisation event.

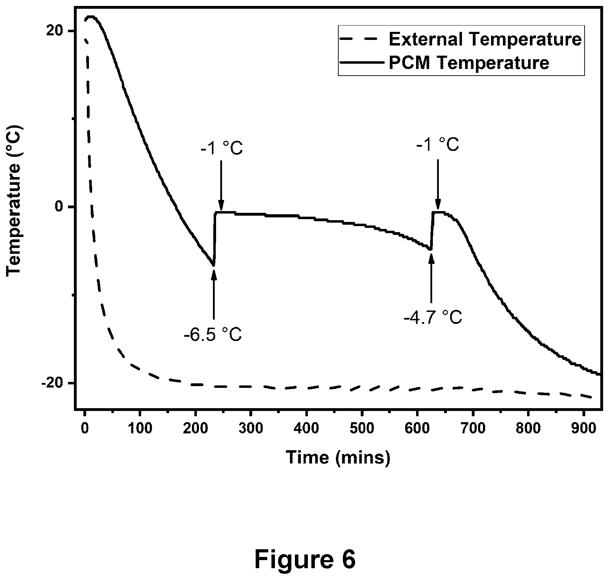

Figure 6 shows the crystallisation of a sodium sulfate-water eutectic in two stages, with both crystallisation stages reaching about -1 °C after initiation of crystallisation. Little sub-cooling and fast crystallisation may result in the regime described in Figure 6.

A further key disclosure which is demonstrated in Figure 6 is that the temperatures of the first and second crystallisation events may be highest first or lowest first. For example, when cooling a PCM, the first crystallisation event chronologically may be either lower or higher in temperature than the second.

It is disclosed herein that salts of halides, nitrates, sulfates and carboxylic acids (such as acetates or formates), and their mixtures exhibit said multiple crystallisation events.

The PCMs disclosed herein may be comprised of at least one salt with at least one or moreof cations selected from a group comprised of:
Lithium;
Sodium;
Potassium;
Calcium;
Magnesium;
Strontium;
Ammonium;
Iron;
Copper;
Manganese; and/or
Zinc;
and at least one sulfate anion and optionally one or more of anions selected from a group comprised of:
Any halide;
Nitrate;
Phosphate;
Carbonate;
any carboxylate, di-carboxylate or tri-carboxylate; and/or
any deprotonated amino acid.

It is a preferred embodiment of the present invention that the PCM comprises one or more salts of group I and/or group II metals.

It is a preferred embodiment of the present invention that the PCM comprises one or more lithium, sodium, potassium, magnesium, calcium, strontium and/or ammonium salts.

It is a preferred embodiment of the present invention that the PCM comprises one or more halide, sulfate, nitrate, carbonate and/or carboxylate salt.

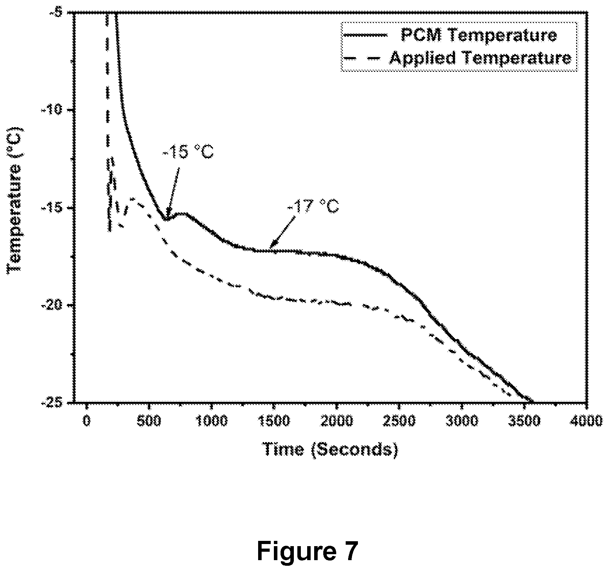

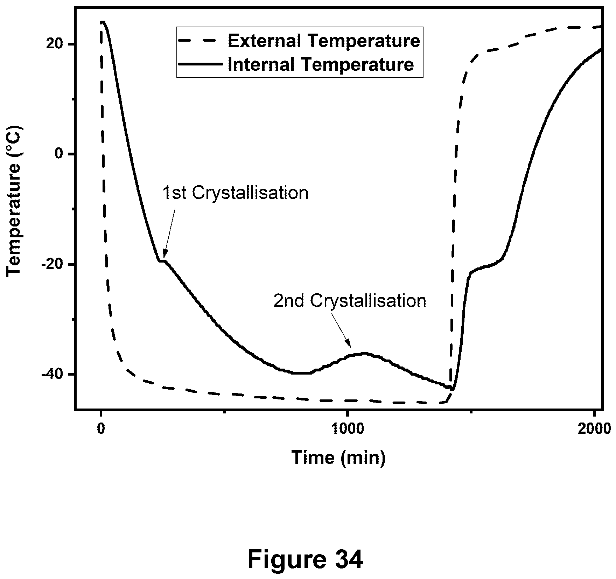

It is noted herein that this double crystallisation effect can be observed in salt-water eutectics where the salt in question has one or more known hydrates. For example the sodium acetate-water eutectic described in Figure 5, or the lithium sulfate-water eutectic, a thermal cycle of which is shown in Figure 34. However, it is disclosed herein that it is also observable where the salt has no known hydrate forms (i.e. the potassium chloride-water eutectic described in Figure 7). Thus, the technical benefit of controlling these nucleation events is expanded to salt without hydrate forms as well as salts with hydrate forms.

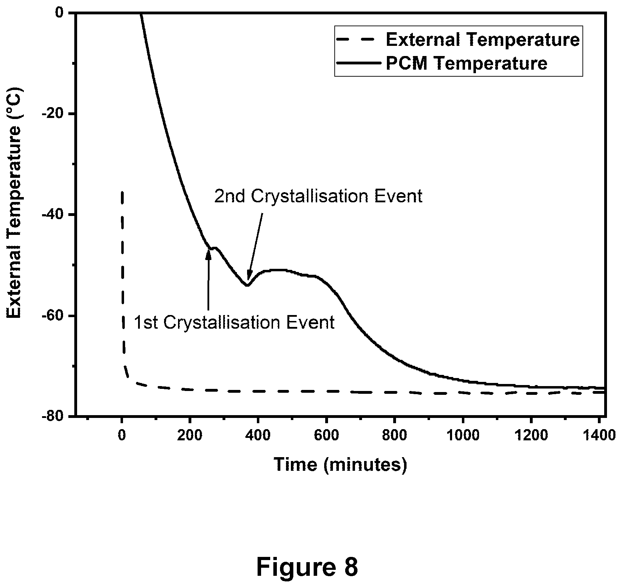

Furthermore, it is disclosed herein that even salts with a plurality of hydrate forms tend to exhibit only two distinct crystallisation events. In Figure 8, a PCM comprising calcium chloride and water is shown to exhibit a double crystallisation regime in the same manner as other salt-water eutectics. It is noteworthy however to note that calcium chloride is known to exist in mono-, di-, tetra- and hexahydrate forms, yet it exhibits only two crystallisation steps when used as a salt-water eutectic.

Therefore, it is disclosed herein that the double crystallisation effect of salt-water eutectics is independent of the number of crystalline hydrate forms available. The inventors note that a salt-water eutectic will exhibit two crystallisation events.

The invention discloses materials which may be used to aid nucleation of one of the crystallisation events of a salt-water eutectic. Providing materials which aid in nucleation ensure that both crystallisation stages are completed before the material is warmed, and therefore allows the full use of the PCM as a thermal energy storage medium. Said nucleation agents also decrease the temperature below which the PCM must be cooled to ensure nucleation for one, or both, of the phase transitions. It is a further disclosure of the present invention that multiple nucleation agents that each individually act to reduce subcooling in one of the crystallisation transitions may be combined to overcome subcooling in both crystallisation transitions.

Herein, it is disclosed that metal oxides, carbides, silicates, halides, and combinations thereof are effective nucleation agents for at least one of the phase transitions observed in sub-zero salt-water eutectic PCMs.

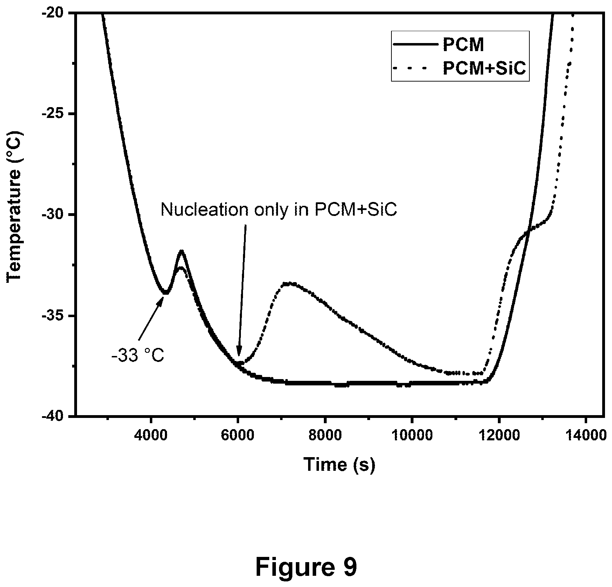

The nucleation agent may be effective on one of the two phase transitions but not the other. For example, as shown in Figure 9 silicon carbide (SiC) is an effective nucleation agent for the second crystallisation event of the magnesium nitrate-water eutectic. Without the SiC nucleation agent, the PCM does not undergo the second crystallisation phase transition and thereby does not exhibit any noticeable melting transition when warmed. Conversely, the SiC containing PCM does exhibit both transitions and shows a melting transition at around -30 °C. Meanwhile, the first crystallisation event is largely unaffected by the addition of SiC.

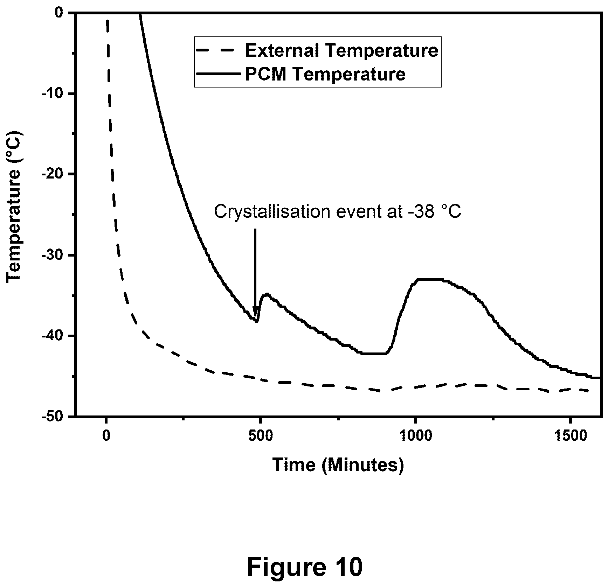

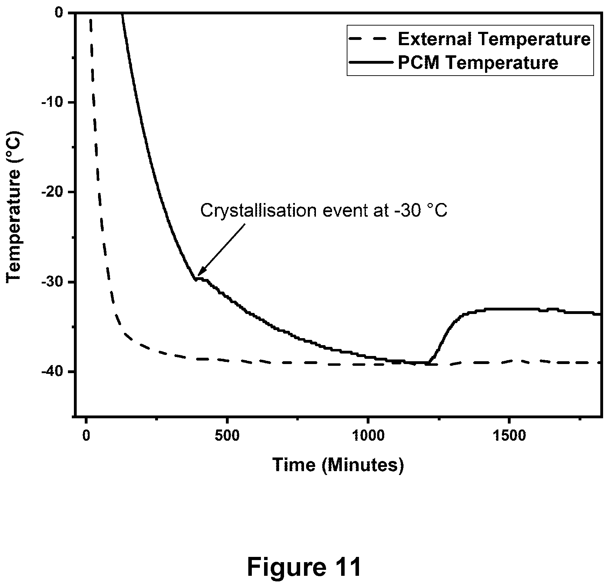

Nucleation agents may also affect only the first crystallisation event. For example, a ceramic composite comprised of alumina and silica is disclosed as an effective nucleation agent for the first, high temperature nucleation event of the magnesium nitrate-water eutectic. Figure 10 shows this eutectic without any nucleation agent present, where the first crystallisation event occurs at about -38 °C. In contrast, when the PCM contains the ceramic nucleation agent, this phase transition occurs at about -30 °C, the thermodynamic phase transition temperature for this eutectic (Figure 11).

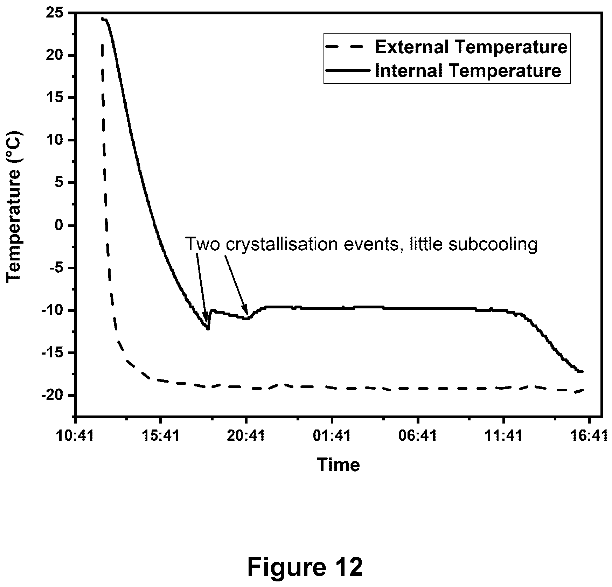

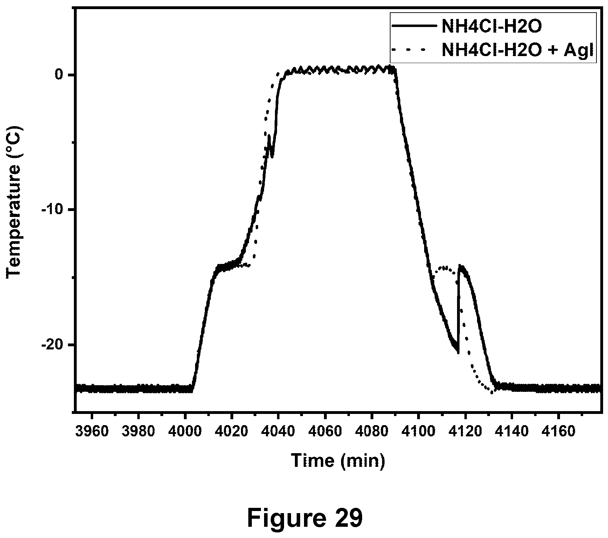

Ice nucleating proteins are disclosed herein as effective nucleation agents for the first crystallisation event. Figure 12 shows the ammonium chloride-water eutectic that has been modified using ice-nucleating proteins. While two crystallisation events are observable in the plot, minimal subcooling is observed in the first compared to a sample without any nucleation agent (i.e. Figure 29), and therefore ice nucleating proteins can be determined to be a nucleation agent for the first crystallisation event.

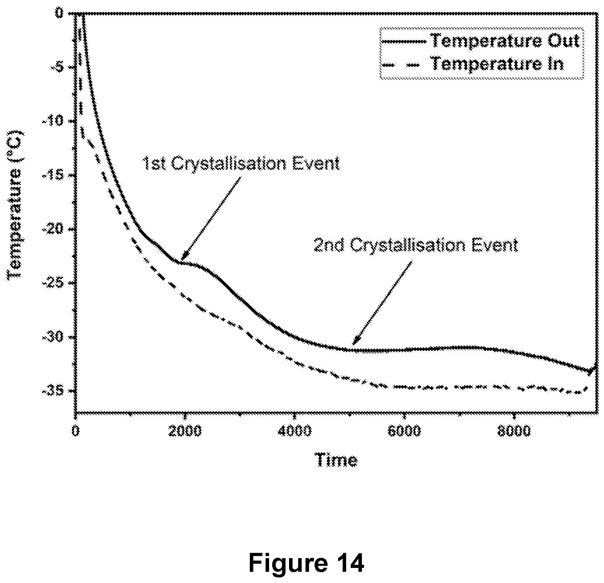

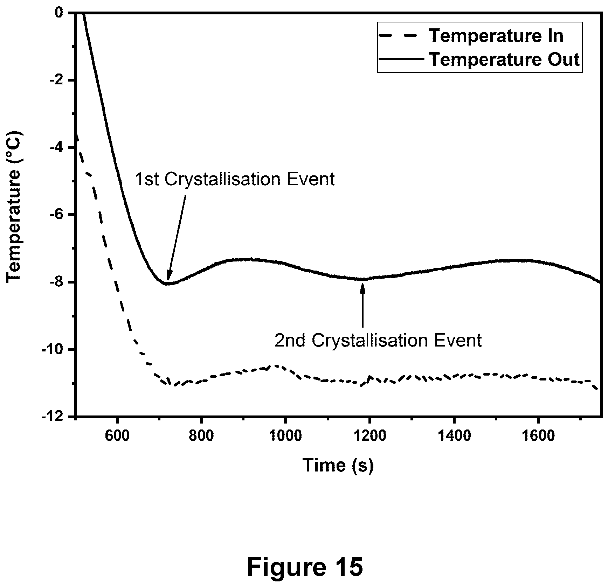

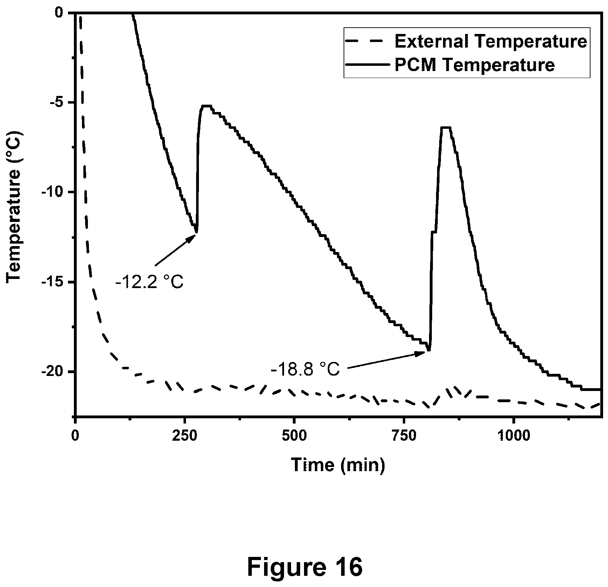

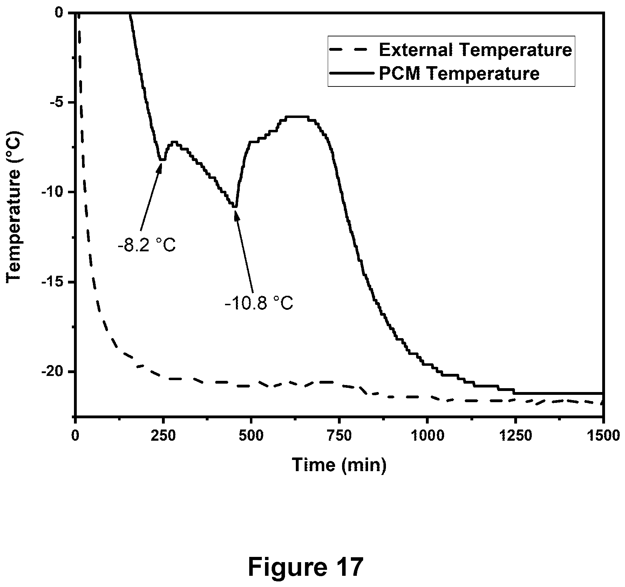

Nucleation is known to be a stochastic process, and thus crystallisation is generally improved by increasing the sample size as the probability of a stable nucleation point being forming increases with increasing sample size. Considering this, it could be expected that the double nucleation profile of sub-zero salt-water eutectic PCMs would differ at large scales. However, it is disclosed herein that this is not the case, and that even at very large (i.e. >1 L) scales that such PCMs still exhibit two distinct crystallisation events. Figure 14 shows the crystallisation of 17 L of a sodium acetate water eutectic proceeding in two stages, with the second crystallisation event only being observed below about -30 °C, far removed from the thermodynamic phase change temperature of about -18 °C. In the same fashion as with smaller samples, it has been found by the inventors that at this increased scale that both crystallisation events must occur to fully access the energy storage capacity of the PCM. Thus, without a nucleation agent, crystallisation of salt-water eutectic PCMs even at large scales requires an excess of cooling. With a nucleation agent as defined herein however, minimal subcooling can be achieved in large PCM samples as well as smaller ones. Figure 15 shows the double crystallisation of a large (c.a. 100 L) sample of the eutectic of magnesium sulfate and water with a combination of calcium carbonate and silver iodide nucleation agents, known to the inventors to improve nucleation in the first and second crystallisation events respectively (see Figures 16 & 17 for a comparison). Minimal subcooling below the thermodynamic phase change temperature of about -5 °C can be observed in both the first and second nucleation events, however both are still distinguishable from one another. Thus, it is demonstrated that two crystallisation events are to be expected when fully freezing salt-water eutectic PCMs, and that nucleation agents that act on one of the crystallisation events are effective even at very large scales.

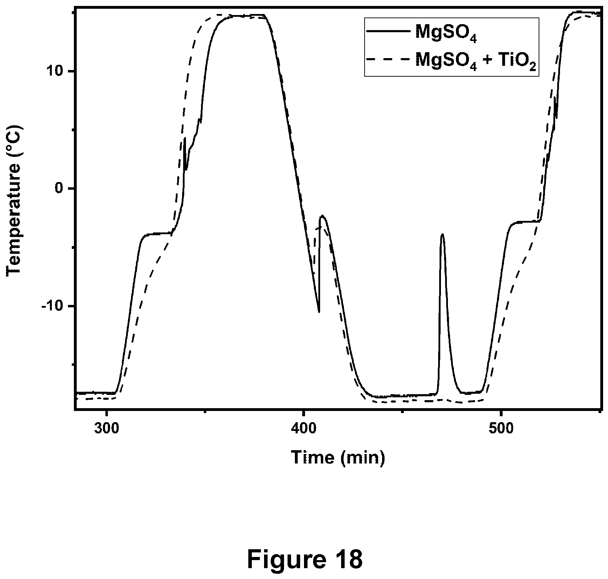

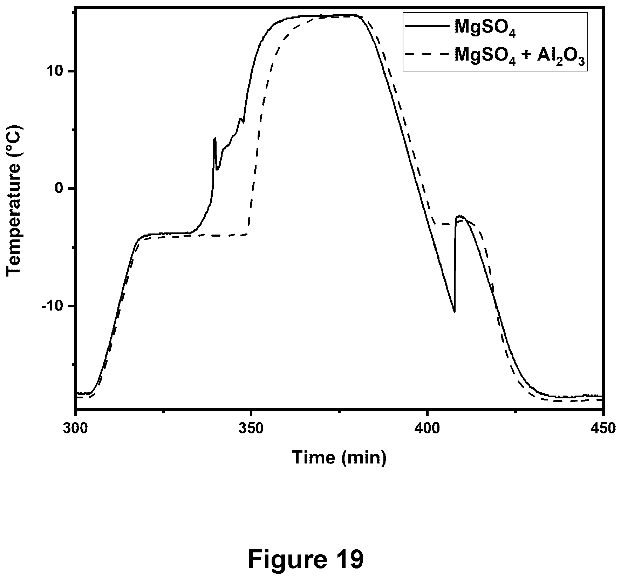

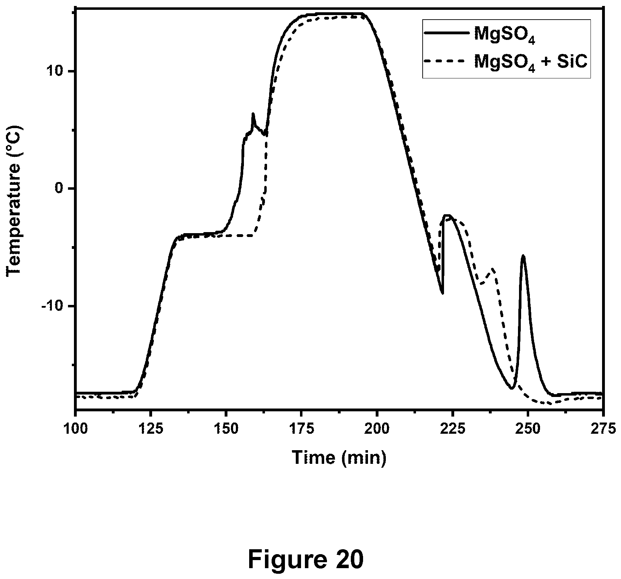

By way of further non-limiting example, a PCM comprised of magnesium sulfate, water and one or more nucleation agents may be considered. Figure 18 shows a comparison of a typical thermal cycle of two samples of such a PCM, one comprising a titanium dioxide nucleation agent, and the other without any nucleation agent. Improvements to the first crystallisation event can be noted for the sample comprising titanium dioxide, but no improvement in the second crystallisation event can be observed. The blank sample does eventually undergo the second crystallisation event, however only after exhibiting significant subcooling. It was found by the inventors that this second crystallisation event in the blank was unreliable, and would not occur on every thermal cycle. Thus, the melting transition of the blank and the sample comprising titanium dioxide were often broad, however clear improvements to the first crystallisation event can be gained by the use of titanium dioxide. A similar test using an aluminium oxide nucleation agent demonstrated improvements to the first crystallisation event, and subsequent full crystallisation (Figure 19). Alumina is shown to raise the temperature at which the first crystallisation event occur, and thus are an aid to nucleation for the first crystallisation event. This improved crystallisation may also aid in inducing the second crystallisation event due in part to the material being partially or wholly solid before the second crystallisation occurs. Contrastingly, as shown in Figure 20, it has been found by the inventors that silicon carbide is a selective nucleation agent for the second crystallisation event. In Figure 20, the magnesium sulfate-water eutectic also comprising silicon carbide shows no improvement in the crystallisation temperature of the first crystallisation event, but a marked increase in the temperature at which the second crystallisation event occurs. Thus, silicon carbide is demonstrated as a selective nucleation agent for the second crystallisation event.

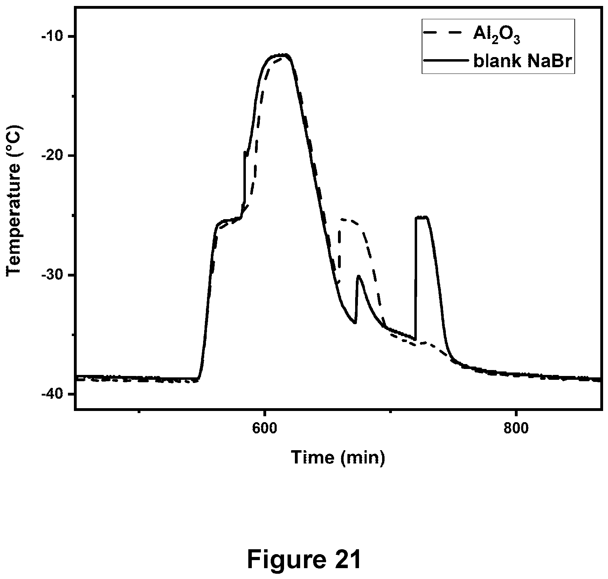

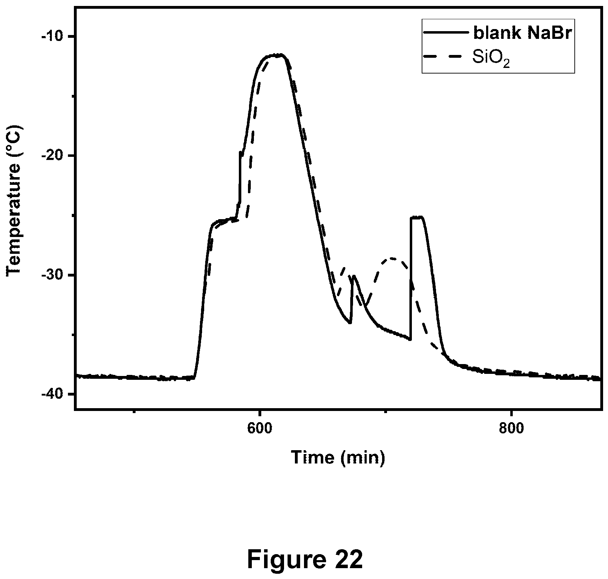

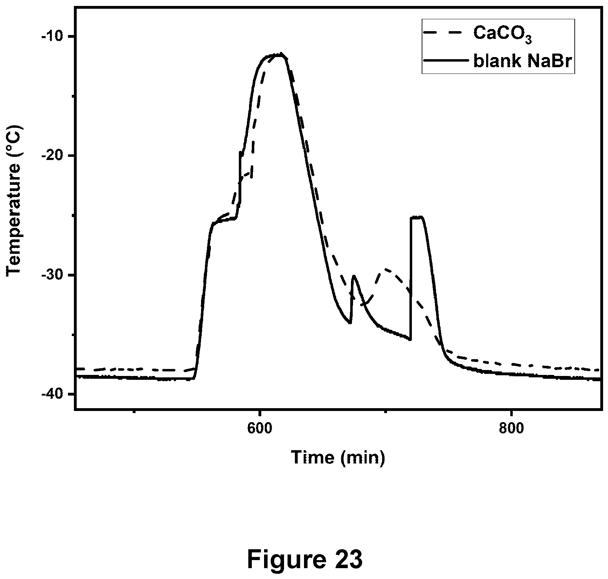

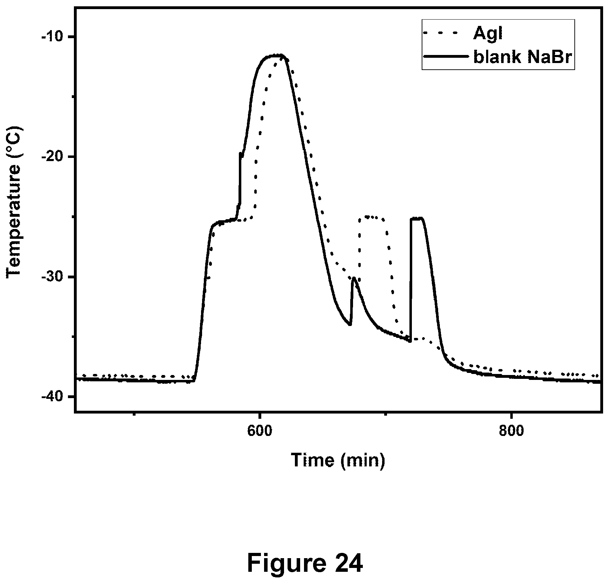

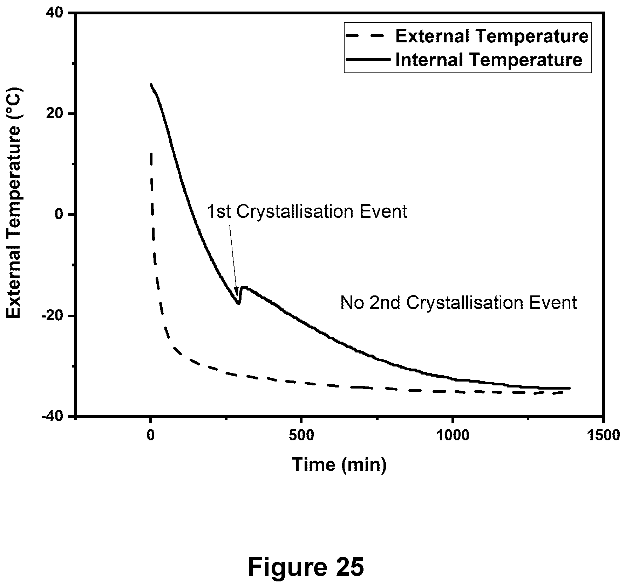

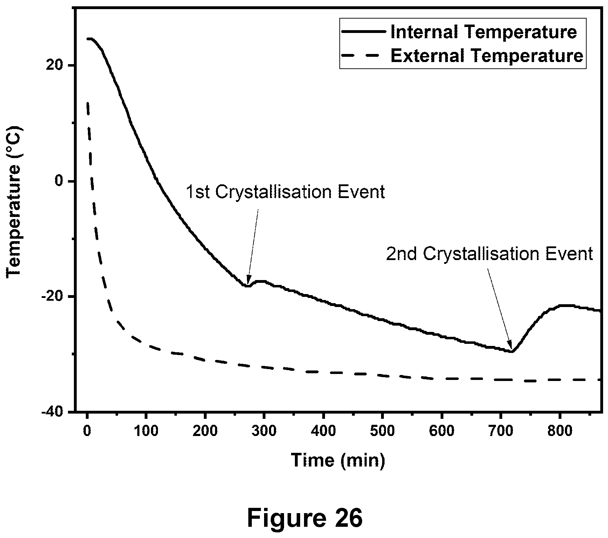

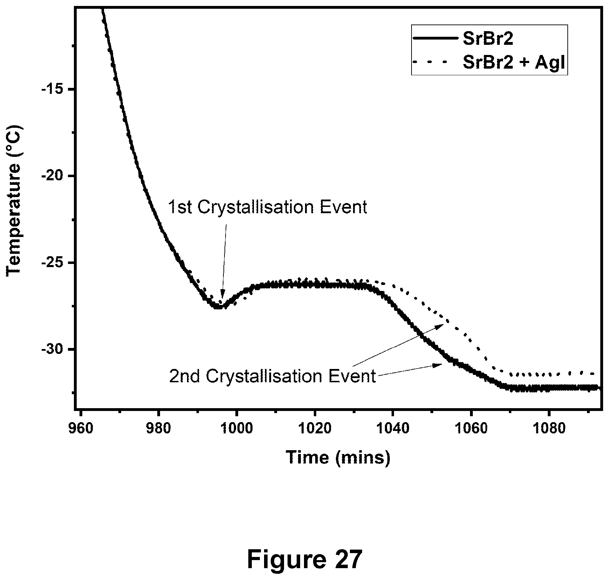

By way of further non-limiting example, a PCM comprised of sodium bromide, water and one or more nucleation agents are considered. It has been found by the inventors that aluminium oxide, silica and calcium carbonate may be used as a nucleation agent to trigger the first crystallisation event (Figures 21, 22 and 23). On testing silver iodide as a nucleator it was also found that it acts as a nucleation agent for the first crystallisation event of a PCM comprised of sodium bromide and water (Figure 24). This is at odds with what is known to the inventors for other PCMs such as carboxylates (Figure 25 & 26) and 2+ metal halides (Figure 27). As shown in Figure 25, without any silver iodide nucleation agent, a sodium acetate salt-water eutectic PCM will undergo its first crystallisation event but not the second, but if silver iodide is added to the system both crystallisation events occur as shown in Figure 26. Similarly, the 2+ halide salt strontium bromide-water eutectic exhibits increased subcooling in its second crystallisation event when silver iodide is absent from the PCM than when it is present, however the first crystallisation event is unaffected by the change (Figure 27).

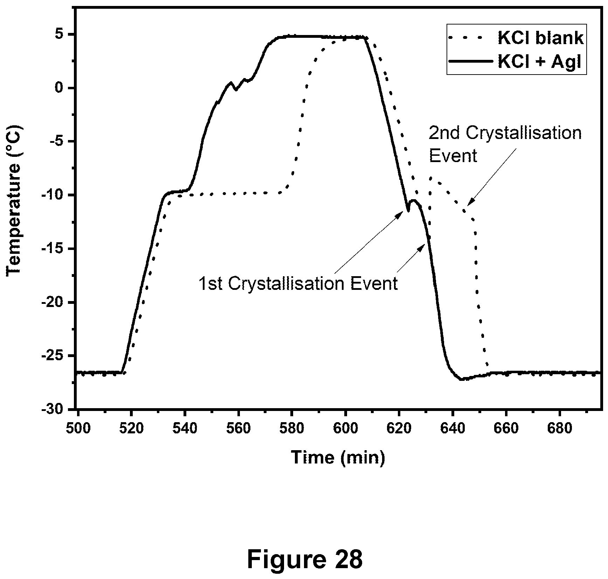

Further testing was carried out on other 1 + cation halides, such as the KCl-water and NH₄Cl-water eutectic, and it was found that silver iodide would act as a nucleation agent for the first crystallisation event. Figure 28 shows a comparison of a salt-water eutectic PCM where the salt is KCI, with and without a Agl nucleation agent. There is a noticeable rise in the first crystallisation event, in the same manner as is noted for other 1 + halide salt-water eutectics when Agl is present in the material, but no indication of a second crystallisation event. It appears that the presence of Agl in fact hinders the second crystallisation event in this example, as the blank, which exhibits significant subcooling in the first crystallisation event, does undergo both transitions, and therefore has a longer melting transition and no sign of any melting transition around 0 °C. Conversely the sample with Agl exhibits little subcooling on the first crystallisation event but no second crystallisation event, and therefore has a short melting transition (i.e. little energy stored). Thus, for a PCM of this type to be used, a combination of nucleation agents that act on the first and second crystallisation event could be used

(i.e. Agl, vermiculite and/or silicon carbide). The NH₄Cl-water eutectic responds in a similar manner to Agl as shown in Figure 29, with neither the blank or the material prepared containing Agl exhibiting a second crystallisation event and thus a relatively short, broad melting transition.

In summation, Table 1 discloses nucleation agents which tend to, but do not in every case, act to reduce subcooling on their first and second crystallisation events.

| Table 1 | |
|---|---|
| Nucleation agent(s) for the first crystallization event (one or more of the following nucleation agent(s) | Nucleation agent(s) for the second crystallization event (one or more of the following nucleation agent(s)) |
| Calcium carbonate | Silicon Carbide |
| Silicon dioxide | Phyllosilicate materials (e.g. vermiculite) |
| Aluminium oxide | Silver iodide |
| Iron oxide | |

More specifically, Table 2 shows the types of salts, in accordance with the present invention, used in sub-zero salt-water eutectic PCMs with nucleation agents which act on the first and second crystallisation event.

| Table 2 | | |
|---|---|---|
| Type of salt | Nucleation agent(s) for the first crystallization event (one or more of the following nucleation agent(s)) | Nucleation agent(s) for the second crystallization event (one ormore of the following nucleation agent(s)) |
| 1+ halides (incl. NH₄)_ | Calcium carbonate | Silicon Carbide |
| | Silicon dioxide | Phyllosilicate materials (e.g. vermiculite) |
| | Aluminium oxide | |
| | Iron oxide | |
| | Silver Iodide | |
| 2+ halides | Calcium carbonate | Silicon Carbide |
| | Silicon dioxide | Vermiculite |
| | Aluminium oxide | Silver iodide |
| | Iron oxide | |
| | Titanium dioxide | |
| Sulfates | Silicon dioxide | Silicon Carbide |
| | Aluminium oxide | Calcium carbonate |
| | Iron oxide | |
| | Titanium dioxide | |
| Nitrates | Calcium carbonate | Silicon Carbide |
| | Silicon dioxide | Vermiculite |
| | Aluminium oxide | Silver iodide |
| | Iron oxide | |
| | Titanium dioxide | |
| Carboxylates | Calcium carbonate | Silicon Carbide |
| | Silicon dioxide | Vermiculite |
| | Aluminium oxide | Silver iodide |
| | Iron oxide | Titanium dioxide |

The types of salts defined in Table 1 and 2 are representative of the preferred nucleating agent(s). Further, more specific, detail is given in Tables 3 and 4.

**Table 3 discloses preferred embodiments of the present invention.**

| Table 3 | | |
|---|---|---|
| Salt used in the salt-water eutectic PCM (or hydrate form thereof) | Nucleation agent(s) for the first crystallization event (one or more of the following nucleation agent(s)) | Nucleation agent(s) for the second crystallization event (one or more of the following nucleation agent(s)) |
| Magnesium nitrate | Silicon dioxide | Silicon carbide, Silver iodide |
| | Titanium dioxide, | |
| | aluminium oxide, iron oxide, calcium carbonate | Vermiculite |
| Magnesium sulfate | Aluminium oxide | Silicon carbide, |
| | Silicon dioxide | Calcium carbonate |
| | Titanium dioxide, aluminium oxide, iron oxide, silver iodide | Vermiculite |
| Magnesium chloride | Aluminium oxide | Silicon carbide, Silver iodide |
| | Silicon dioxide | |
| | Titanium dioxide, | |
| | aluminium oxide, iron oxide | |
| Sodium acetate | Calcium carbonate, Silicon dioxide, Iron oxide | Silver iodide |
| | | Silicon carbide |
| | | Titanium dioxide |
| Sodium formate | Calcium carbonate | Silver iodide |
| | Silicon dioxide | Silicon carbide |
| | | Titanium dioxide |
| | | Vermiculite |
| Sodium sulfate | Aluminium oxide | Silicon carbide, Calcium carbonate |
| | Silicon dioxide, iron oxide, Silver iodide | |
| Sodium chloride | Aluminium oxide, Calcium carbonate | Titanium dioxide |
| | | Vermiculite |
| | Silicon dioxide | Silicon Carbide |
| | Silver Iodide | |
| Sodium bromide | Calcium carbonate, Aluminium oxide | Silicon Carbide |
| | | Silver iodide |
| | Silicon dioxide | |
| Sodium propionate | Calcium carbonate, Silicon dioxide, | Silver iodide |
| | | Silicon carbide |
| | | Titanium dioxide |
| Sodium 2,2'-bishydroxypropionate | Calcium carbonate, Silicon dioxide, | Silver iodide |
| | | Silicon carbide |
| | | Titanium dioxide |
| Sodium glycolate | Calcium carbonate, Silicon dioxide, | Silver iodide |
| | | Silicon carbide |
| | | Titanium dioxide |
| Sodium glycinate | Calcium carbonate, Silicon dioxide, | Silver iodide |
| | | Silicon carbide |
| | | Titanium dioxide |
| Sodium glutamate | Calcium carbonate, Silicon dioxide, | Silver iodide |
| | | Silicon carbide |
| | | Titanium dioxide |
| Sodium aspartate | Calcium carbonate, Silicon dioxide, | Silver iodide |
| | | Silicon carbide |
| | | Titanium dioxide |
| Sodium alaninate | Calcium carbonate, Silicon dioxide, | Silver iodide |
| | | Silicon carbide |
| | | Titanium dioxide |
| Disodium adipate | Calcium carbonate, Silicon dioxide, | Silver iodide |
| | | Silicon carbide |
| | | Titanium dioxide |
| Potassium chloride | Aluminium oxide | Silicon Carbide |
| | Calcium carbonate | Vermiculite |
| | Titanium dioxide | |
| | Silver iodide | |
| Potassium acetate | Calcium carbonate, Silicon dioxide, Titanium dioxide | Silver iodide |
| | | Silicon carbide |
| | | Titanium dioxide |
| | | Vermiculite |
| Potassium glycinate | Calcium carbonate, Silicon dioxide, Titanium dioxide | Silver iodide |
| | | Silicon carbide |
| | | Titanium dioxide |
| | | Vermiculite |
| Potassium alaninate | Calcium carbonate, Silicon dioxide, Titanium dioxide | Silver iodide |
| | | Silicon carbide |
| | | Titanium dioxide |
| | | Vermiculite |
| Dipotassium adipate | Calcium carbonate, Silicon dioxide, Titanium dioxide | Silver iodide |
| | | Silicon carbide |
| | | Titanium dioxide |
| | | Vermiculite |
| Ammonium chloride | Calcium carbonate | Silicon carbide |
| | Aluminium oxide | Vermiculite |
| | Silver iodide | |
| | Titanium dioxide | |
| Lithium sulfate | Iron oxide | Silicon carbide |
| | Titanium dioxide | Calcium carbonate |
| | Aluminium oxide | Vermiculite |
| Lithium nitrate | Iron oxide | Silicon carbide |
| | Aluminium oxide | Titanium dioxide |
| | | Silicon dioxide |
| | | Vermiculite |
| Strontium chloride | Calcium carbonate | Silver Iodide |
| | Aluminium oxide | Silicon carbide |
| | Silicon dioxide | Vermiculite |
| | Titanium dioxide, iron oxide | |
| Strontium bromide | Calcium carbonate | Silver Iodide |
| | Aluminium oxide | Silicon carbide |
| | Silicon dioxide | Vermiculite |
| | Titanium dioxide, iron oxide | |

**Table 4 shows more specific further preferred embodiments of the present invention.**

| PCM Salt Identity and Concentration (approx. % in water) | Melting Transition Temperature (approx. °C) | Nucleation agent(s) for the first crystallization event (one or more of the following nucleation agent(s)) (>0.01 wt.%) | Nucleation agent(s) for the second crystallization event (one or more of the following nucleation agent(s)) (>0.01 wt.%) |
|---|---|---|---|
| Sodium sulfate (3.5 wt.%) | -1 | Silver iodide | Silicon carbide |
| Sodium potassium tartrate (5 wt.%) | -4 | Calcium carbonate | Silicon carbide |
| Magnesium sulfate (19 wt.%) | -5 | Aluminium oxide | Silicon carbide |
| | | Silver iodide | Calcium carbonate |
| KCI (19.5 wt.%) | -10 | Titanium dioxide | Vermiculite |
| | | Aluminium oxide | |
| | | Silver iodide | |
| | | Calcium carbonate | |
| NH₄Cl (18.6 wt.%) | -14 | Silver iodide | Vermiculite |
| | | Aluminium oxide | Silicon carbide |
| | | Calcium carbonate | |
| NaOOCH (24.0 wt.%) | -15 | Calcium carbonate | Vermiculite |
| | | | Silicon carbide |
| | | | Silver iodide |
| SrCl₂ (19.5 wt.%) | -16 | Aluminium oxide | Silver iodide |
| | | | Silicon carbide |
| | | | Vermiculite |
| **NaNO3** (35 wt.%) | -17 | Calcium carbonate | Silver iodide |
| | | Iron oxide | Silicon carbide |
| | | Silicon dioxide | Vermiculite |
| | | | Aluminium oxide |
| NaOAc (22.7 wt.%) NaOAc (27.0 wt.%) | -15 | Iron oxide | Silicon carbide |
| | -18 | Calcium carbonate | Silver iodide |
| | | Silicon dioxide | |
| NaCl (22.4 wt.%) | -21 | Calcium carbonate | Vermiculite |
| | | Aluminium oxide | Silicon carbide |
| | | | Titanium dioxide |
| LiNO₃ (24.5 wt.%) | -22 | Iron oxide | Silicon carbide |
| | | | Titanium dioxide |
| | | | Silicon dioxide |
| NaBr (39 wt.%) | -25 | Calcium carbonate | Silicon carbide |
| | | Aluminium oxide | |
| | | Silver Iodide | |
| SrBr₂ (41 wt.%) | -26 | Calcium carbonate | Silver iodide |
| Mg(NO3)₂ (29.9 wt.%) | -30 | Silicon dioxide | Silicon carbide |
| | | Aluminium oxide | |

**Table 5 details various nucleation agents and the salts and concentrations with which they may be used.**

| Salts (one or more thereof in water) | Nucleation Agent(s) | Minimum loading (wt. %) | Preferred loading (wt. %) |
|---|---|---|---|
| Magnesium nitrate | Calcium carbonate | 0.1 | 1.0 |
| Magnesium sulfate | | | |
| Ammonium chloride | | | |
| Sodium potassium tartrate | | | |
| Sodium formate | | | |
| Sodium nitrate | | | |
| Sodium acetate | | | |
| Sodium chloride | | | |
| Sodium bromide | | | |
| Strontium bromide | | | |
| Magnesium sulfate | Aluminium oxide | 0.01 | 0.5 |
| Potassium chloride | | | |
| Ammonium chloride | | | |
| Strontium chloride | | | |
| Sodium nitrate | | | |
| Sodium chloride | | | |
| Sodium bromide | | | |
| Magnesium nitrate | | | |
| Sodium acetate | Silicon oxide | 0.01 | 0.5 |
| Lithium nitrate | | | |
| Magnesium nitrate | | | |
| Sodium sulfate | Silicon carbide | 0.01 | 0.5 |
| Sodium potassium tartrate | | | |
| Magnesium sulfate | | | |
| Ammonium chloride | | | |
| Sodium formate | | | |
| Strontium chloride | | | |
| Sodium nitrate | | | |
| Sodium acetate | | | |
| Sodium chloride | | | |
| Lithium nitrate | | | |
| Sodium bromide | | | |
| Magnesium nitrate | | | |
| Sodium sulfate | Silver iodide | 0.01 | 0.5 |
| Magnesium sulfate | | | |
| Potassium chloride | | | |
| Ammonium chloride | | | |
| Sodium bromide | | | |
| Strontium bromide | | | |
| Strontium chloride | | | |
| Sodium nitrate | Iron oxide | 0.01 | 0.5 |
| Sodium acetate | | | |
| Lithium nitrate | | | |
| Potassium chloride | Vermiculite | 0.01 | 0.5 |
| Ammonium chloride | | | |
| Sodium formate | | | |
| Strontium chloride | | | |
| Sodium nitrate | | | |
| Sodium chloride | | | |
| Lithium nitrate | | | |
| Magnesium sulfate | Titanium dioxide | 0.01 | 0.5 |
| Potassium chloride | | | |
| Sodium chloride | | | |
| Lithium nitrate | | | |

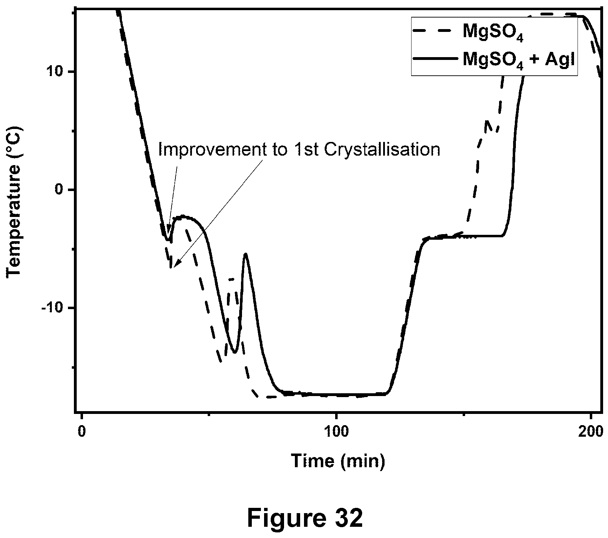

Further specific embodiments of the present invention are further exemplified in Figures 32-69.

Figure 32 shows the use of Agl to improve the first crystallisation event of a PCM comprising a magnesium sulfate-water eutectic (i.e. approx. 19 wt.% MgSO₄ in water).

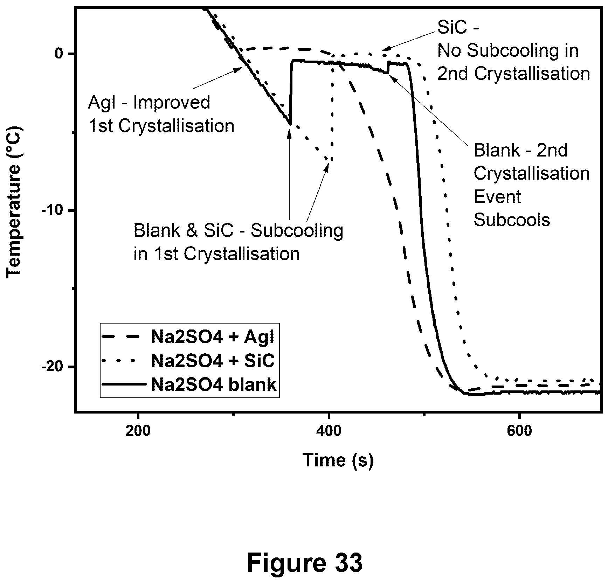

Figure 33 shows a further sulfate salt water eutectic, the sodium sulfate water eutectic (i.e. approx. 3.5 wt.% Na₂SO₄ in water) having improved nucleation of the 1^{st} and 2^{nd} crystallisation events by the addition of Agl and SiC respectively against a blank.

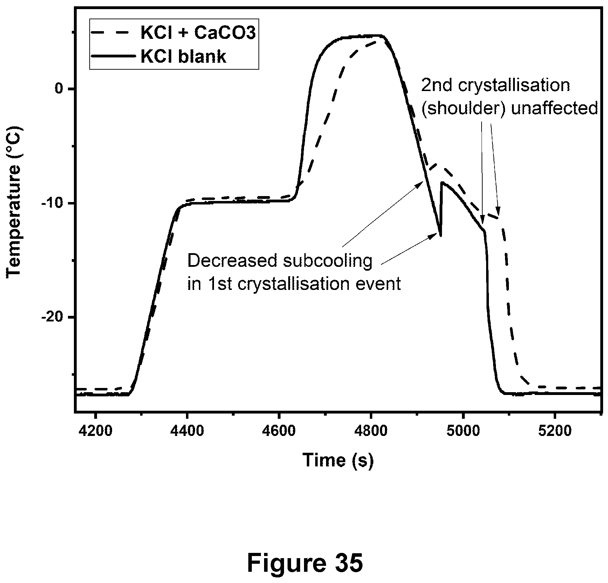

Figure 35 shows calcium carbonate increasing the temperature of the first crystallisation event of a PCM comprising a eutectic of KCI and water (i.e. approx. 19.5 wt.% KCI in water).

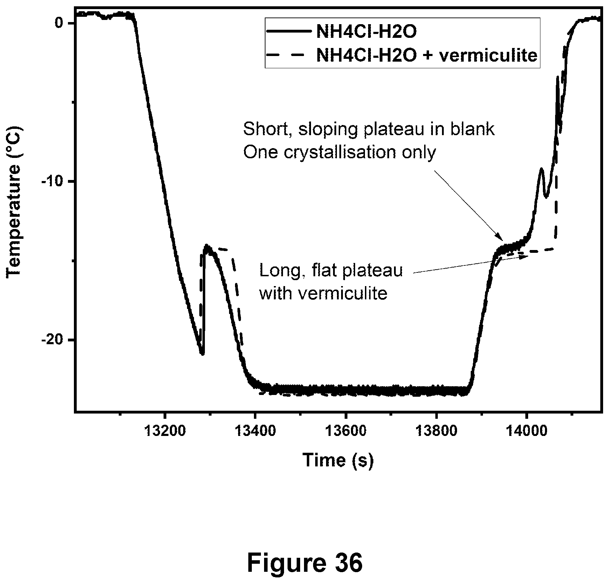

Figure 36 shows that the presence of vermiculite induces the second crystallisation event in a eutectic of NH₄Cl and water (i.e. approx. 18.6 wt.% NH₄Cl in water), whereas the blank containing no vermiculite is shown to only go through one crystallisation event and therefore exhibits a short melting transition across a wide temperature range compared to the sample comprising vermiculite.

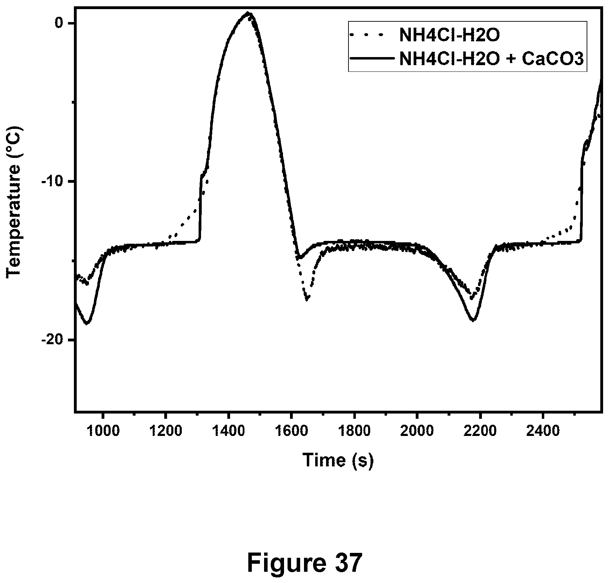

Figure 37 shows that the presence of calcium carbonate improving the crystallisation of the first crystallisation event of a eutectic of NH4Cl and water (i.e. approx. 18.6 wt.% NH₄Cl in water).

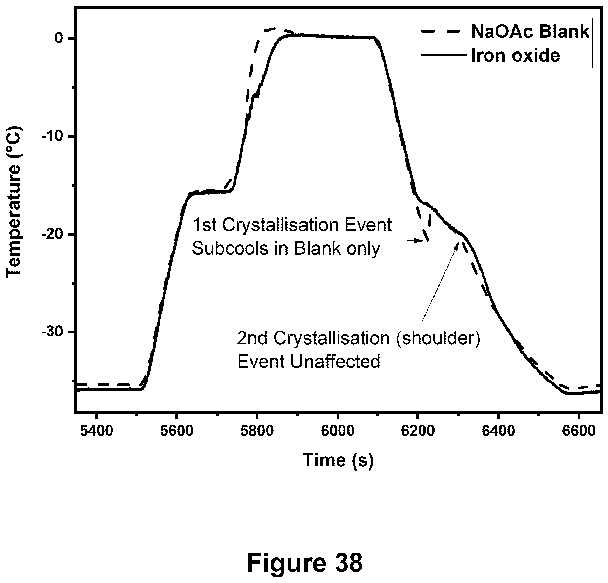

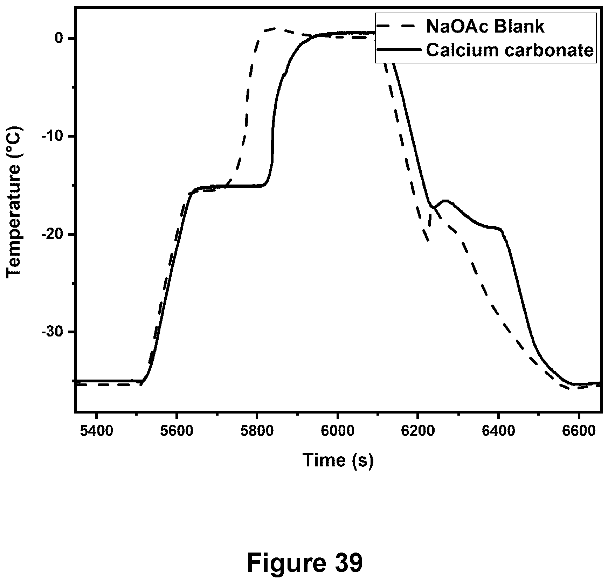

Figure 38 shows that iron oxide improves the nucleation of the first nucleation event of a eutectic of sodium acetate and water (i.e. approx. 22.7 wt.% NaOAc in water). This effect is also noted when calcium carbonate (Figure 39).

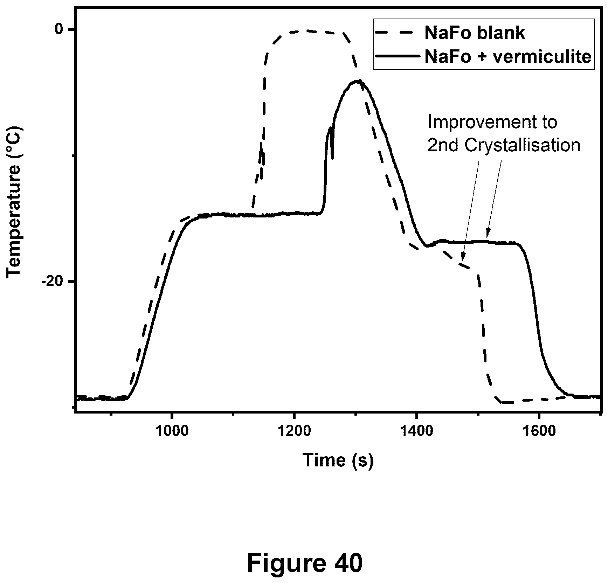

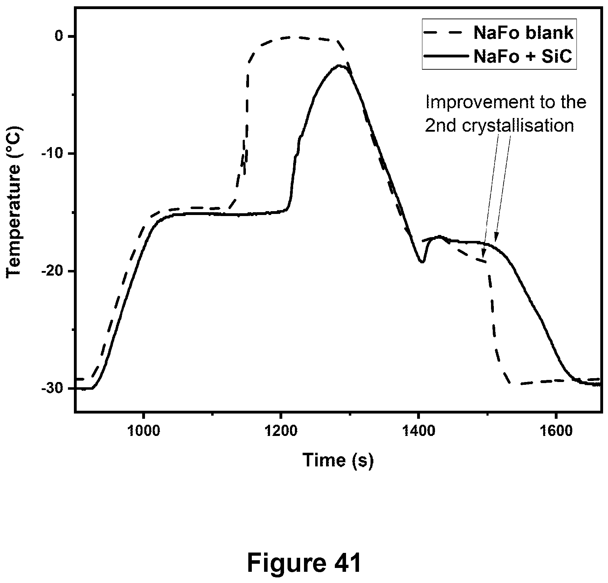

Figure 40 shows the improvement of the second crystallisation event of a eutectic of sodium formate and water (i.e. approx. 24.0 wt.% sodium formate - abbreviated NaFo - in water) due to the presence of vermiculite. Figure 41 shows a similar improvement to the second crystallisation event when using silicon carbide as a nucleation agent.

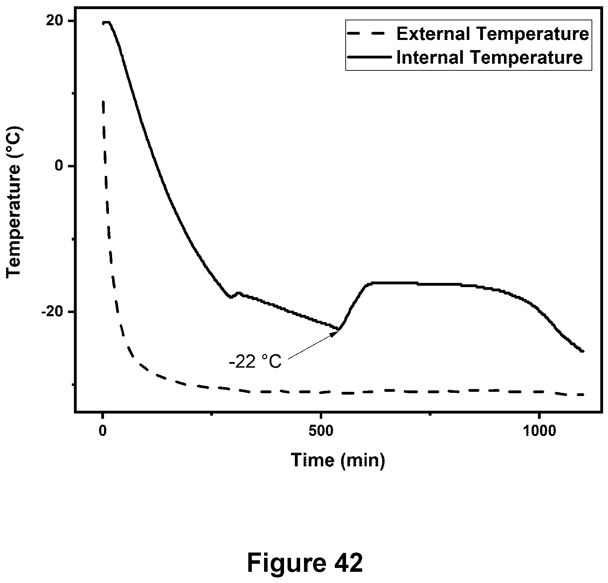

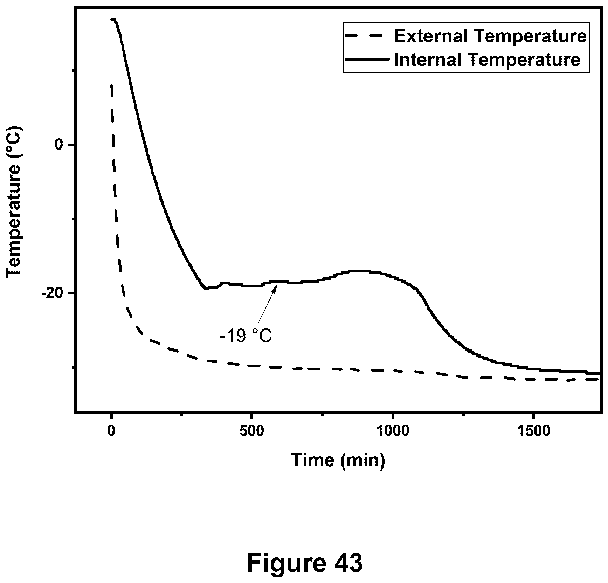

Figure 42 shows the freezing process of a PCM comprising a sodium formate-water eutectic (approx. 24.0 wt.% sodium formate in water) without any nucleation agent. Two crystallisation events can be observed, with the second occurring at around -22 °C. Figure 43 shows the improvement of this crystallisation event for this PCM when silver iodide is present, with nucleation now occurring at about -19 °C.

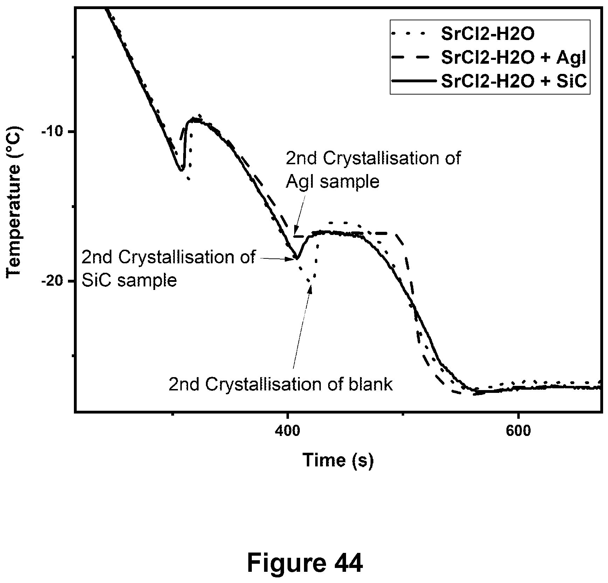

Figure 44 shows improvements to the second crystallisation event of a PCM comprising a strontium chloride-water eutectic (approx. 19.5 wt.% SrCl₂ in water) in the presence of silicon carbide and silver iodide.

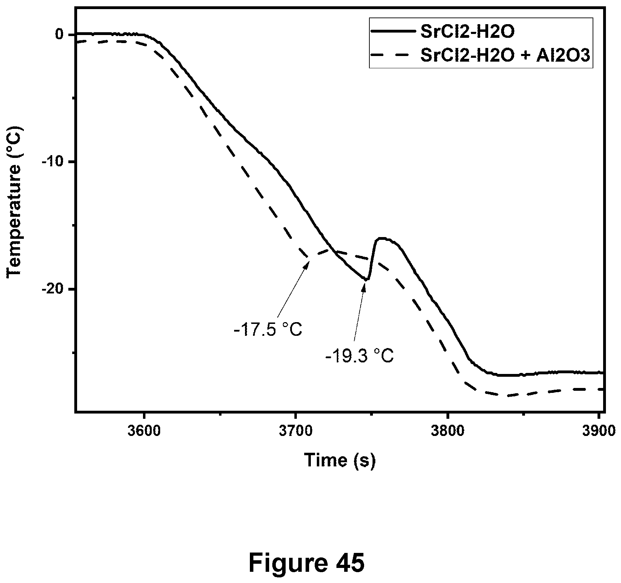

Figure 45 shows improvements to the first crystallisation event of a PCM comprising a strontium chloride-water eutectic (approx. 19.5 wt.% SrCl₂ in water) in the presence of aluminium oxide.

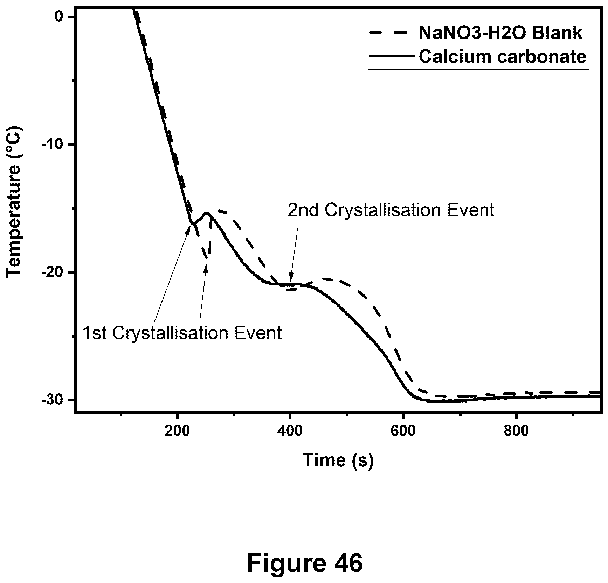

Figure 46 shows improvements to the first crystallisation event of a PCM comprising a sodium nitrate-water eutectic (approx. 35.0 wt.% NaNO₃ in water) in the presence of calcium carbonate.

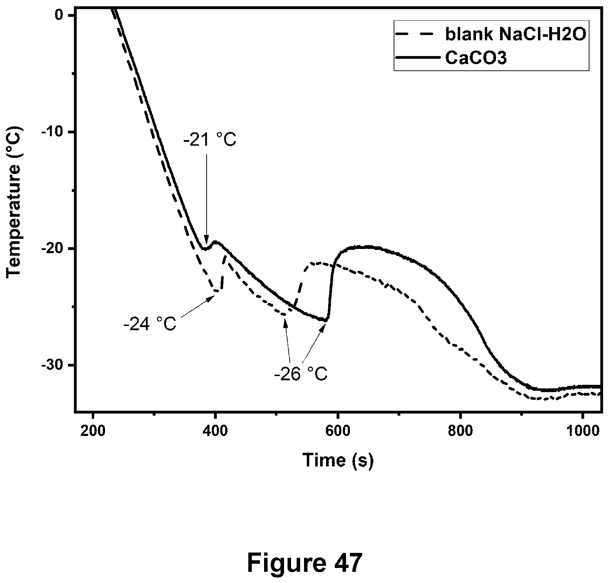

Figure 47 shows improvements to the first crystallisation event of a PCM comprising a sodium chloride-water eutectic (approx. 22.4 wt.% NaCl in water) in the presence of calcium carbonate.

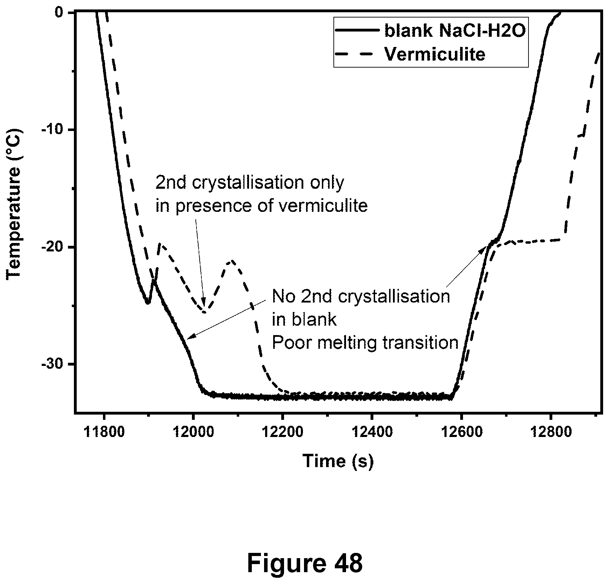

Figure 48 shows that the second crystallisation event of a PCM comprising a sodium chloride-water eutectic (approx. 22.4 wt.% NaCl in water) may not occur on cooling, giving a poor melting transition on warming to its phase transition temperature (about -21 °C). However the second crystallisation event may be triggered in the presence of vermiculite.

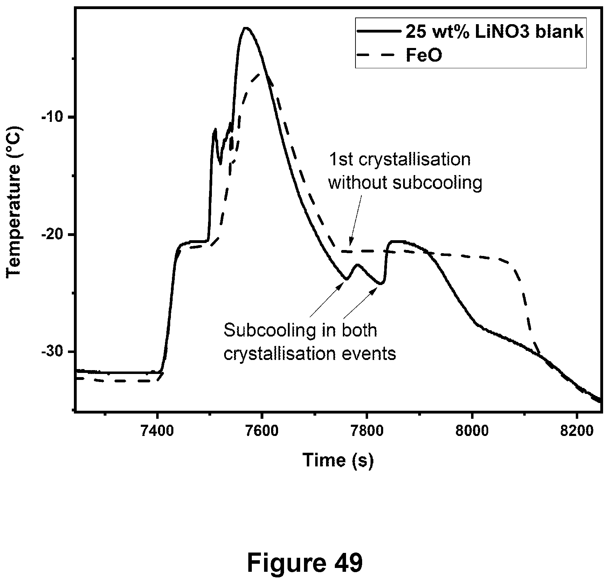

Figure 49 shows improvements to the first crystallisation event of a PCM comprising a lithium nitrate-water eutectic (approx. 24.5 wt.% LiNO₃ in water) in the presence of iron oxide.

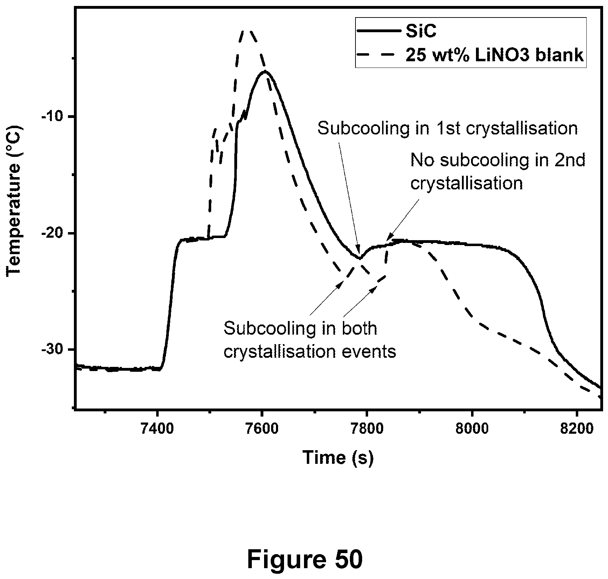

Figure 50 shows improvements to the second crystallisation event of a PCM comprising a lithium nitrate-water eutectic (approx. 24.5 wt.% LiNO₃ in water) in the presence of silicon carbide.

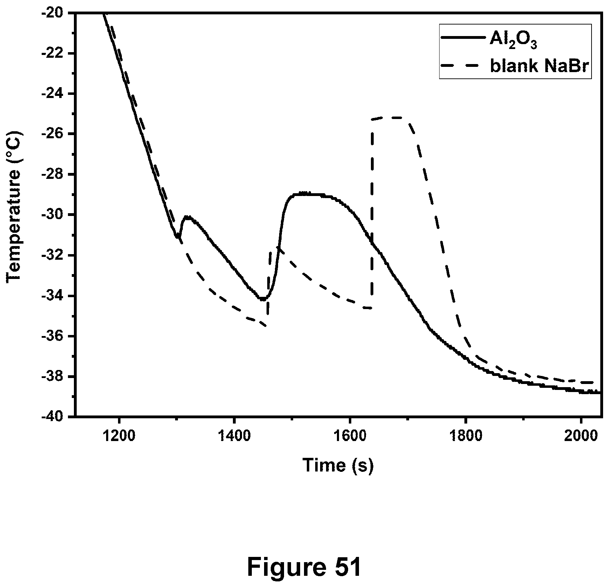

Figure 51 shows improvements to the first crystallisation event of a PCM comprising a sodium bromide-water eutectic (approx. 39 wt.% NaBr in water) in the presence of alumina.

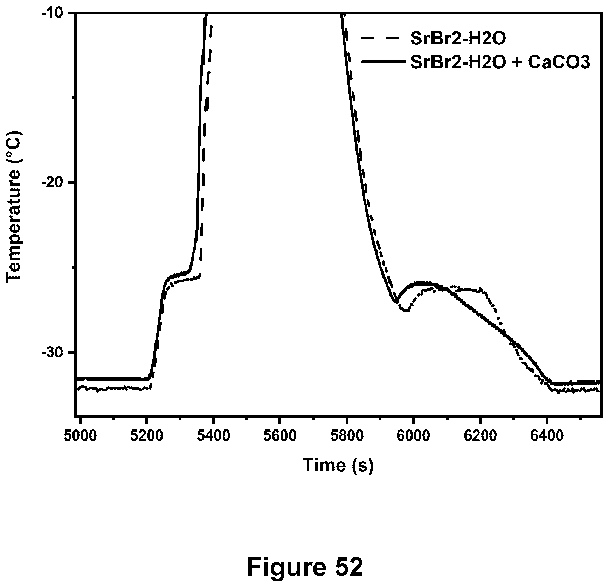

Figure 52 shows improvements to the first crystallisation event of a PCM comprising a strontium bromide-water eutectic (approx. 41 wt.% SrBr₂ in water) in the presence of calcium carbonate.

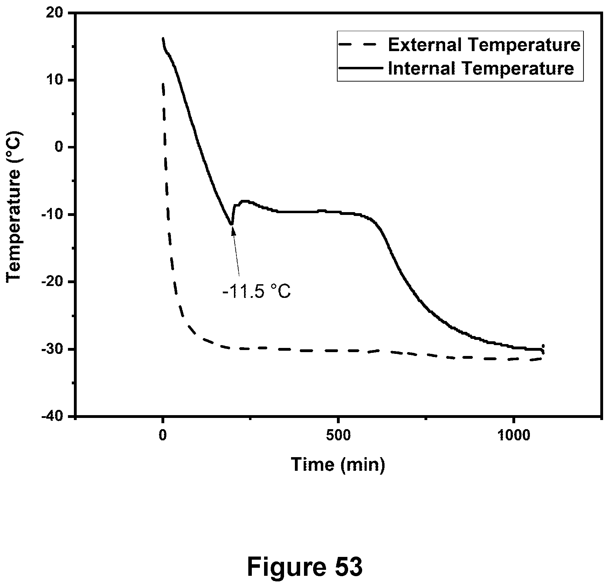

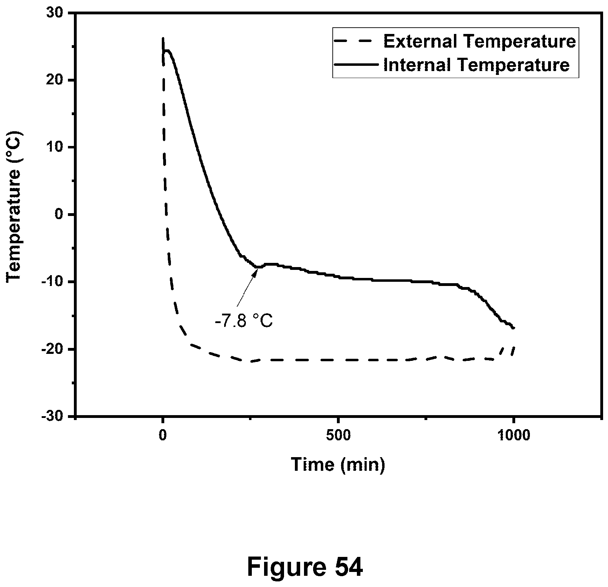

Figures 53 and 54 show the freezing profile of a eutectic comprised of rochelle's salt (potassium sodium tartrate) in water (approx. 5 wt.% rochelle's salt in water). The blank (Figure 53) shows subcooling of the first crystallisation event to about -11.5 °C, whereas the sample with calcium carbonate (Figure 54) has the first crystallisation event at around -7.8 °C. In both cases the second crystallisation event occurs as a plateau around -9.8 °C and are thus unaffected by the presence of calcium carbonate.

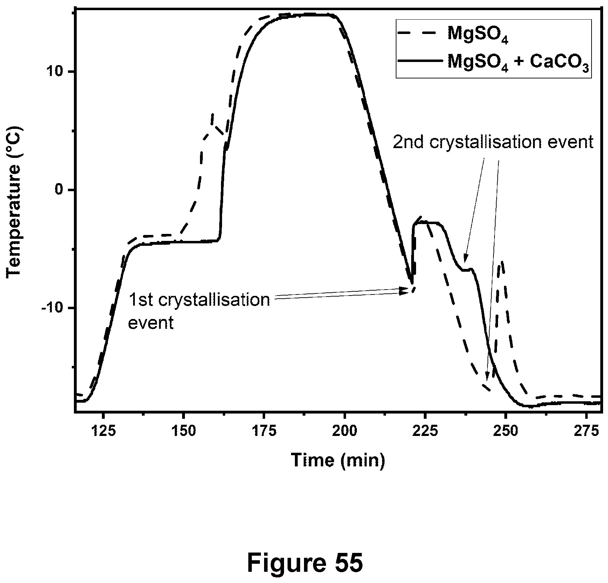

Figure 55 shows improvements to the second crystallisation event of a PCM comprising a magnesium sulfate-water eutectic (approx. 19 wt.% MgSO₄ in water) in the presence of calcium carbonate.

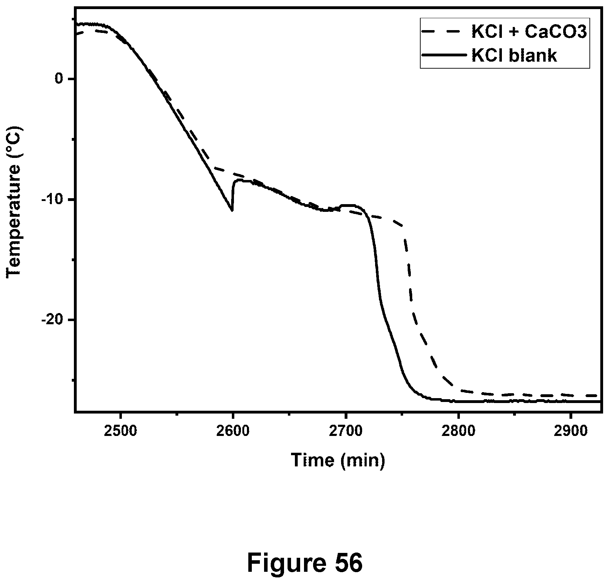

Figure 56 shows improvements to the first crystallisation event of a PCM comprising a potassium chloride-water eutectic (approx. 19.5 wt.% KCI in water) in the presence of calcium carbonate.

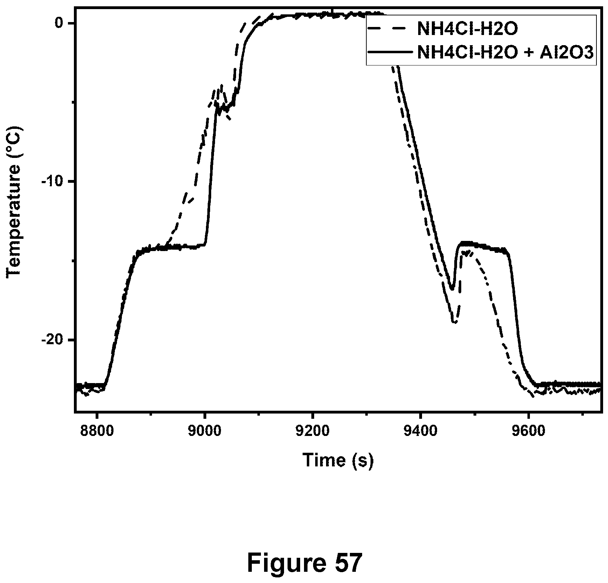

Figure 57 shows improvements to the first crystallisation event of a PCM comprising an ammonium chloride-water eutectic (approx. 18.6 wt.% NH₄Cl in water) in the presence of aluminium oxide.

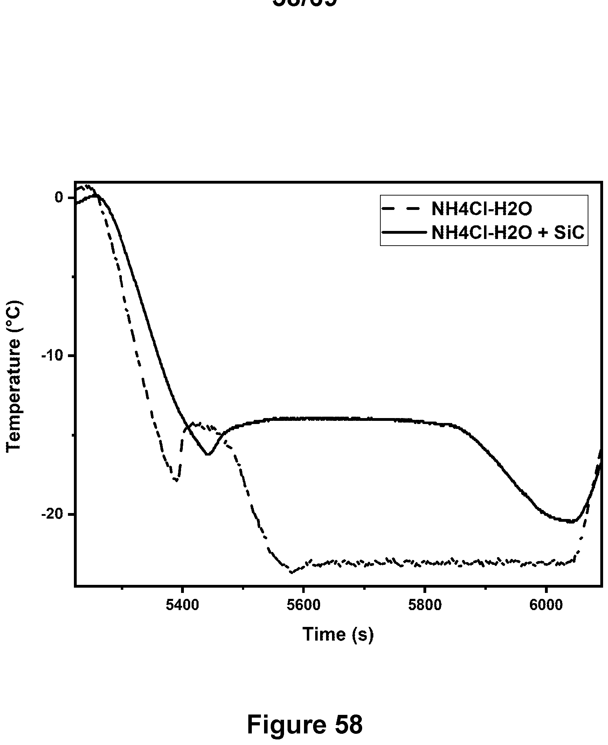

Figure 58 shows improvements to the second crystallisation event of a PCM comprising an ammonium chloride-water eutectic (approx. 18.6 wt.% NH₄Cl in water) in the presence of silicon carbide.

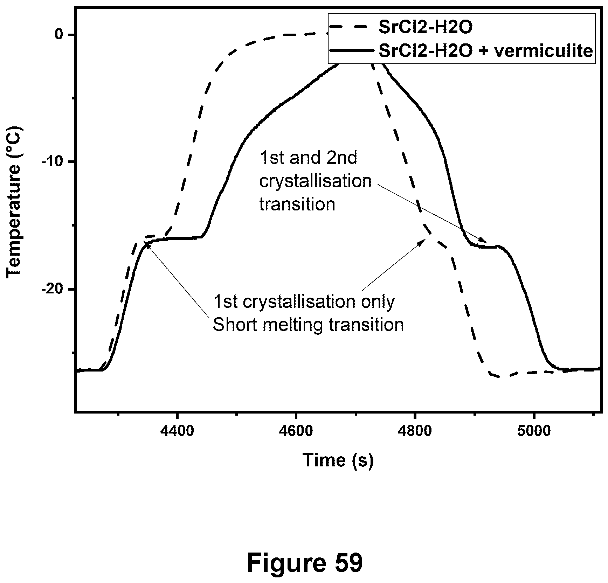

Figure 59 shows improvements to the second crystallisation event of a PCM comprising a strontium chloride-water eutectic (approx. 19.5 wt.% SrCl₂ in water) in the presence of vermiculite. The blank comparison sample exhibits a shorter melting transition, indicating only partial crystallisation (i.e. only the first crystallisation event has taken place). By comparison, the sample comprising vermiculite exhibits a long, flat melting transition (i.e. has high energy) and therefore has undergone both crystallisation events.

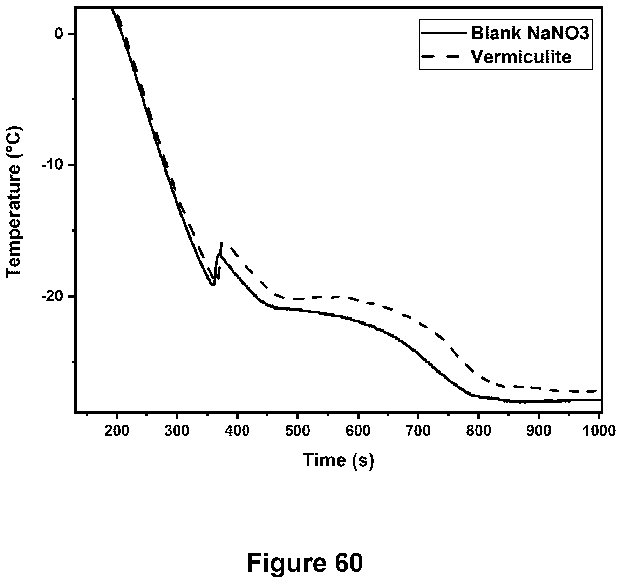

Figure 60 shows improvements to the second crystallisation event of a PCM comprising a sodium nitrate-water eutectic (approx. 35 wt.% NaNO₃ in water) in the presence of vermiculite.

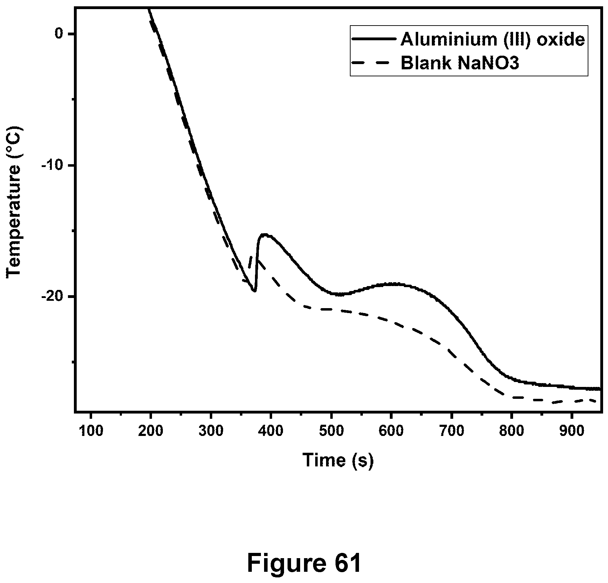

Figure 61 shows improvements to the second crystallisation event of a PCM comprising a sodium nitrate-water eutectic (approx. 35 wt.% NaNO₃ in water) in the presence of aluminium oxide.

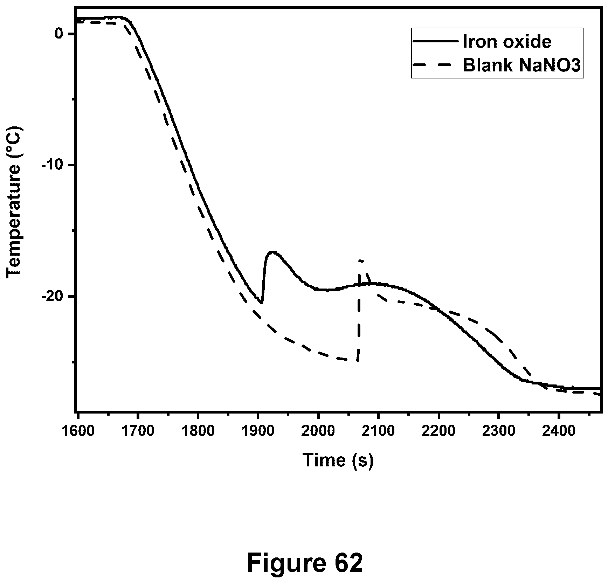

Figure 62 shows improvements to the first crystallisation event of a PCM comprising a sodium nitrate-water eutectic (approx. 35 wt.% NaNO₃ in water) in the presence of iron oxide.

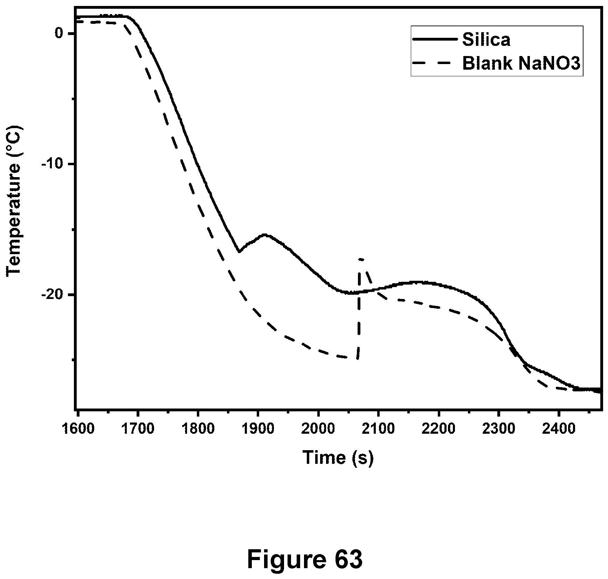

Figure 63 shows improvements to the first crystallisation event of a PCM comprising a sodium nitrate-water eutectic (approx. 35 wt.% NaNO₃ in water) in the presence of silicon oxide.

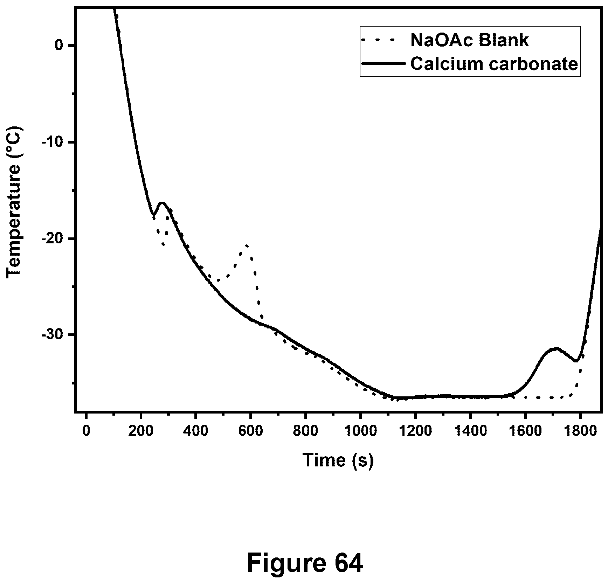

Figure 64 shows improvements to the first crystallisation event of a PCM comprising a sodium acetate-water eutectic (approx. 27.0 wt.% NaOAc in water) in the presence of calcium carbonate.

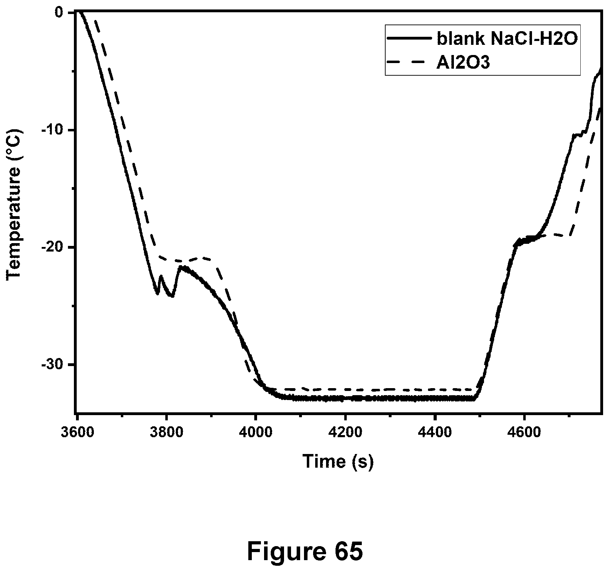

Figure 65 shows improvements to the first crystallisation event of a PCM comprising a sodium chloride-water eutectic (approx. 22.4 wt.% NaCl in water) in the presence of aluminium oxide.

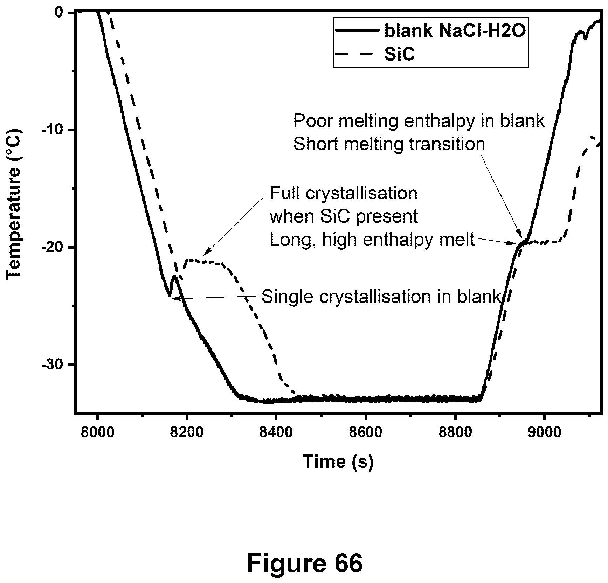

Figure 66 shows improvements to the second crystallisation event of a PCM comprising a sodium chloride-water eutectic (approx. 22.4 wt.% NaCl in water) in the presence of silicon carbide. A longer melting transition on melting is indicative of full crystallisation, which is not present in the blank but can be observed in the sample comprising silicon carbide.

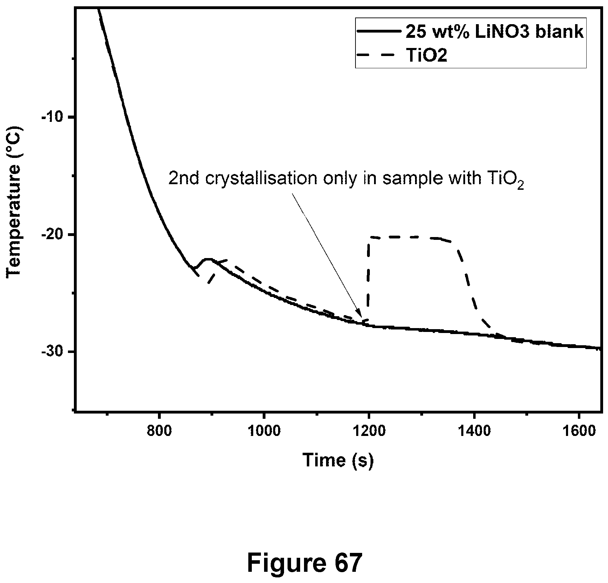

Figure 67 shows TiO₂ triggering the second crystallisation event in a PCM comprising a lithium nitrate-water eutectic (approx. 24.5 wt.% LiNO₃ in water). The blank sample was found to exhibit subcooling of the second crystallisation event below the minimum temperature used during thermal cycling.

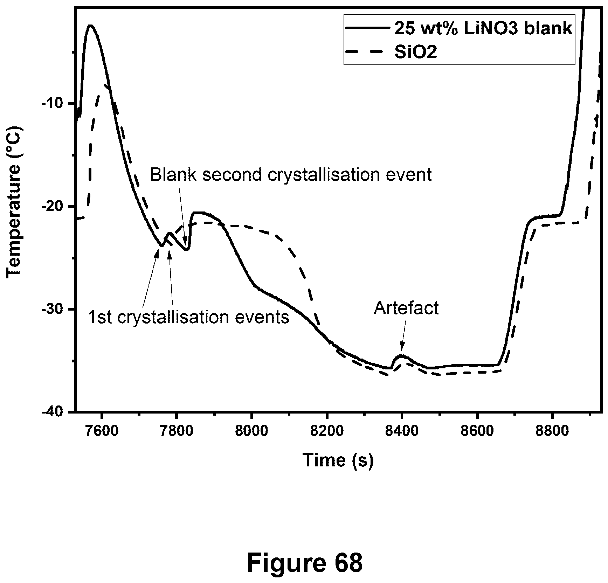

Figure 68 shows SiO₂ improving the second crystallisation event of a PCM comprising a lithium nitrate-water eutectic (approx. 24.5 wt.% LiNO₃ in water). The anomaly denoted artefact is due to a nearby sample warming on crystallisation and is not due to the samples described in the figure. Here it can be observed that improvements to the second crystallisation event of the PCM caused by the inclusion of SiO₂ cause the two crystallisation events to be indistinguishable from one another, i.e. no subcooling is observed in the second after the first has occurred/is occurring. However full crystallisation (both first and second crystallisation events) can be demonstrated to have occurred as the melting transition is observable, flat, and long in duration. These features are only observed in samples that have undergone full crystallisation.

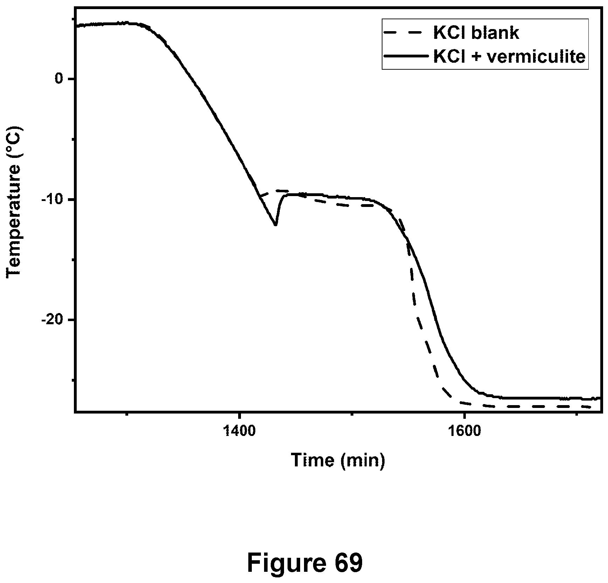

Figure 69 shows vermiculite improving the second crystallisation of a potassium chloride-water eutectic (approx. 19.5 wt.% KCI in water). The improvement results in a higher temperature, flatter freezing plateau, where the blank has a drop of c.a. 1 °C under the test conditions before flattening out after the initial (1^{st}) crystallisation event.

It is disclosed herein that corrosion of metal components in contact with a salt-water eutectic PCM may be reduced by reduced subcooling by nucleation agent addition. Corrosion is increased where liquid PCM is in contact with metal components, whereas by contrast the solid phase of the same material will have significantly reduced corrosion. Improving the nucleation characteristics of a salt-water eutectic PCM such that less contact is made between liquid PCM and any metallic components, and thereby overall corrosion is limited.

Furthermore, it is disclosed herein that sub-zero PCMs featuring one or more nucleation agent(s) which act to suppress subcooling in one of the PCMs crystallisation events may constitute part of a heat battery apparatus. Thereby, energy storage at subzero temperatures may be achieved with reliable nucleation and the potential for minimal cooling below the thermodynamic phase transition of the PCM component. Cooling of such a system to induce both crystallisation events may proceed via a heat exchanger, or via the addition of a cooling material such as dry ice or liquid nitrogen.

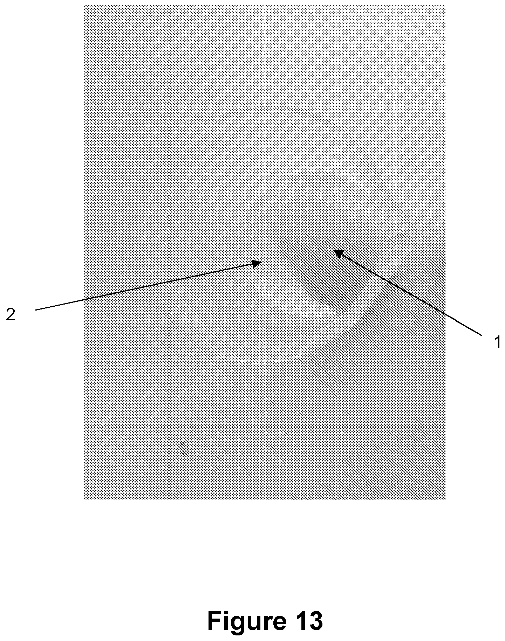

Determination of the state of crystallisation of a sub-zero PCM is also complicated by their double crystallisation characteristics. As they appear solid after the first crystallisation event, it could be concluded at that point that the material has been fully crystallised and may be used in cooling applications. However, it is known to the inventors that to access the full latent heat of the material both crystallisation events must occur. This leads to issues when using such materials, for example in a heat battery apparatus, where the crystallisation state of the material must be known to determine the cooling potential available (i.e. the state of charge of a heat battery comprising such a PCM). Further to the disclosures herein that one or more nucleation agents may be used to ensure that both crystallisation events occur, it is disclosed that full crystallisation may be determined by various means such as, but not limited to, determination of the amount of free water content (i.e. water not bound in a solid form) and optical means. It is disclosed herein that a sub-zero PCM sample may be optically distinct after its first and second crystallisation events. In Figure 13 a sub-zero PCM which has solidified after its first crystallisation event is undergoing its second crystallisation event, as evidenced by the material turning from a translucent solid (1) into an opaque one (2). Thereby the progress of both crystallisation events may be observed and quantified, for example by optical reflectivity or transmission. This is disclosed to be advantageous in a heat battery comprising a sub-zero PCM where both crystal transitions are required, as it allows confirmation of such.

It is disclosed herein that a PCM with a phase change temperature around -30 °C may be formed by the addition of magnesium nitrate to water to produce about a 29.9 wt.% solution. For this purpose, a hydrated form of magnesium nitrate (e.g. magnesium nitrate hexahydrate) may be used. This solution may then be combined with silica and/or alumina in an amount corresponding to more than 0.1 wt.%, or preferably at least about 0.5 wt.% to aid in the nucleation of the first crystallisation event. This solution may also be combined with silicon carbide in an amount corresponding to more than 0.1 wt.%, or preferably at least about 0.5 wt.% to aid in the nucleation of the second crystallisation event. This material may then be used by thermally cycling it across the phase change at around -30 °C. Using this nucleation agent system, the first crystallisation event may occur around -30 °C, where the second crystallisation event may occur between about -30 °C and about -40 °C.

It is disclosed herein that a PCM with a phase change temperature around -26 °C may be formed by the addition of strontium bromide to water to produce about a 41 wt.% solution. For this purpose, a hydrated form of strontium bromide (e.g. strontium bromide hexahydrate) may be used. This solution may then be combined with calcium carbonate in an amount corresponding to more than 0.1 wt.%, or preferably at least about 0.5 wt.% to aid in the nucleation of the first crystallisation event. This solution may also be combined with silver iodide in an amount corresponding to more than 0.1 wt.%, or preferably at least about 0.5 wt.% to aid in the nucleation of the second crystallisation event. This material may then be used by thermally cycling it across the phase change at around -26 °C. Using this nucleation agent system, the first and second crystallisation events may occur between about -26 °C and about -32 °C.

It is disclosed herein that a PCM with a phase change temperature around -25 °C may be formed by the addition of sodium bromide to water to produce about a 39 wt.% solution. This solution may then be combined with calcium carbonate in an amount corresponding to more than 0.1 wt.%, or preferably at least about 0.5 wt.% to aid in the nucleation of the first crystallisation event. This solution may also be combined with silicon carbide in an amount corresponding to more than 0.1 wt.%, or preferably at least about 0.5 wt.% to aid in the nucleation of the second crystallisation event. This material may then be used by thermally cycling it across the phase change at around - 25 °C. Using this nucleation agent system, the first and second crystallisation events may occur between about -25 °C and about -33 °C.

It is disclosed herein that a PCM with a phase change temperature around -22 °C may be formed by the addition of lithium nitrate to water to produce about a 25 wt.% solution. For this purpose, a hydrated form of lithium nitrate (e.g. lithium nitrate trihydrate) may be used. This solution may then be combined with iron oxide in an amount corresponding to more than 0.1 wt.%, or preferably at least about 0.5 wt.% to aid in the nucleation of the first crystallisation event. This solution may also be combined with silicon carbide in an amount corresponding to more than 0.1 wt.%, or preferably at least about 0.5 wt.% to aid in the nucleation of the second crystallisation event. This material may then be used by thermally cycling it across the phase change at around -22 °C. Using this nucleation agent system, the first and second crystallisation events may occur between about -22 °C and about -27 °C.

It is disclosed herein that a PCM with a phase change temperature around -21 °C may be formed by the addition of sodium chloride to water to produce about a 22 wt.% solution. This solution may then be combined with calcium carbonate in an amount corresponding to more than 0.1 wt.%, or preferably at least about 0.5 wt.% to aid in the nucleation of the first crystallisation event. This solution may also be combined with silicon carbide and/or vermiculite in an amount corresponding to more than 0.1 wt.%, or preferably at least about 0.5 wt.% to aid in the nucleation of the second crystallisation event. This material may then be used by thermally cycling it across the phase change at around -21 °C. Using this nucleation agent system, the first and second crystallisation events may occur between about -21 °C and about -28 °C.

It is disclosed herein that a PCM with a phase change temperature around -18 °C may be formed by the addition of sodium acetate to water to produce about a 20-30 wt.% solution, preferably about 23 wt.% or 27 wt.% sodium acetate in water. For this purpose, a hydrated form of sodium acetate (e.g. sodium acetate trihydrate) may be used. This solution may then be combined with calcium carbonate in an amount corresponding to more than 0.1 wt.%, or preferably at least about 0.5 wt.% to aid in the nucleation of the first crystallisation event. This solution may also be combined with silver iodide in an amount corresponding to more than 0.1 wt.%, or preferably at least about 0.5 wt.% to aid in the nucleation of the second crystallisation event. This material may then be used by thermally cycling it across the phase change at around -18 °C. Using this nucleation agent system, the first and second crystallisation events may occur between about -18 °C and about -30 °C.

It is disclosed herein that a PCM with a phase change temperature around -17 °C may be formed by the addition of sodium nitrate to water to produce about a 35 wt.% solution. This solution may then be combined with iron oxide and/or silica in an amount corresponding to more than 0.1 wt.%, or preferably at least about 0.5 wt.% to aid in the nucleation of the first crystallisation event. This solution may also be combined with aluminium oxide and/or vermiculite in an amount corresponding to more than 0.1 wt.%, or preferably at least about 0.5 wt.% to aid in the nucleation of the second crystallisation event. This material may then be used by thermally cycling it across the phase change at around -17 °C. Using this nucleation agent system, the first and second crystallisation events may occur between about -17 °C and about -25 °C.

It is disclosed herein that a PCM with a phase change temperature around -16 °C may be formed by the addition of strontium chloride to water to produce about a 20 wt.% solution. For this purpose, a hydrated form of strontium chloride (e.g. strontium chloride hexahydrate) may be used. This solution may then be combined with aluminium oxide in an amount corresponding to more than 0.1 wt.%, or preferably at least about 0.5 wt.% to aid in the nucleation of the first crystallisation event. This solution may also be combined with vermiculite and/or silver iodide in an amount corresponding to more than 0.1 wt.%, or preferably at least about 0.5 wt.% to aid in the nucleation of the second crystallisation event. This material may then be used by thermally cycling it across the phase change at around -16 °C. Using this nucleation agent system, the first and second crystallisation events may occur between about -16 °C and about -25 °C.

It is disclosed herein that a PCM with a phase change temperature around -15 °C may be formed by the addition of sodium formate to water to produce about a 24 wt.% solution. This solution may then be combined with calcium carbonate in an amount corresponding to more than 0.1 wt.%, or preferably at least about 0.5 wt.% to aid in the nucleation of the first crystallisation event. This solution may also be combined with vermiculite in an amount corresponding to more than 0.1 wt.%, or preferably at least about 0.5 wt.% to aid in the nucleation of the second crystallisation event. This material may then be used by thermally cycling it across the phase change at around -15 °C. Using this nucleation agent system, the first and second crystallisation events may occur between about -15 °C and about -20 °C.

It is disclosed herein that a PCM with a phase change temperature around -14 °C may be formed by the addition of ammonium chloride to water to produce about a 19 wt.% solution. This solution may then be combined with silver iodide in an amount corresponding to more than 0.1 wt.%, or preferably at least about 0.5 wt.% to aid in the nucleation of the first crystallisation event. This solution may also be combined with vermiculite and/or silicon carbide in an amount corresponding to more than 0.1 wt.%, or preferably at least about 0.5 wt.% to aid in the nucleation of the second crystallisation event. This material may then be used by thermally cycling it across the phase change at around -14 °C. Using this nucleation agent system, the first and second crystallisation events may occur between about -14 °C and about -20 °C.

It is disclosed herein that a PCM with a phase change temperature around -10 °C may be formed by the addition of potassium chloride to water to produce about a 20 wt.% solution. This solution may then be combined with titanium dioxide and/or silver iodide in an amount corresponding to more than 0.1 wt.%, or preferably at least about 0.5 wt.% to aid in the nucleation of the first crystallisation event. This solution may also be combined with vermiculite in an amount corresponding to more than 0.1 wt.%, or preferably at least about 0.5 wt.% to aid in the nucleation of the second crystallisation event. This material may then be used by thermally cycling it across the phase change at around -10 °C. Using this nucleation agent system, the first and second crystallisation events may occur between about -10 °C and about -20 °C.

It is disclosed herein that a PCM with a phase change temperature around -5 °C may be formed by the addition of magnesium sulfate to water to produce about a 19 wt.% solution. For this purpose, a hydrated form of magnesium sulfate (e.g. magnesium sulfate heptahydrate) may be used. This solution may then be combined with aluminium oxide and/or silver iodide in an amount corresponding to more than 0.1 wt.%, or preferably at least about 0.5 wt.% to aid in the nucleation of the first crystallisation event. This solution may also be combined with silicon carbide and/or calcium carbonate in an amount corresponding to more than 0.1 wt.%, or preferably at least about 0.5 wt.% to aid in the nucleation of the second crystallisation event. This material may then be used by thermally cycling it across the phase change at around -5 °C. Using this nucleation agent system, the first and second crystallisation events may occur between about -5 °C and about -10 °C.

It is disclosed herein that a PCM with a phase change temperature around -1 °C may be formed by the addition of sodium sulfate to water to produce about a 4 wt.% solution. For this purpose, a hydrated form of sodium sulfate (e.g. sodium sulfate decahydrate) may be used. This solution may then be combined with silver iodide in an amount corresponding to more than 0.1 wt.%, or preferably at least about 0.5 wt.% to aid in the nucleation of the first crystallisation event. This solution may also be combined with silicon carbide in an amount corresponding to more than 0.1 wt.%, or preferably at least about 0.5 wt.% to aid in the nucleation of the second crystallisation event. This material may then be used by thermally cycling it across the phase change at around - 5 °C. Using this nucleation agent system, the first and second crystallisation events may occur between about -5 °C and about -10 °C.

Whilst various exemplary embodiments have been disclosed, it shall be understood that variations, modifications and combinations of the phase change materials disclosed herein disclosed herein as long as they are covered by the scope of the appended claims.

## Claims

1. A salt-water eutectic phase change material (PCM) with a melting point below 0 °C which exhibits at least two crystallisation events on cooling, comprised of:
at least one salt;
water; and
one or more nucleation agent(s) which act to reduce subcooling in a first crystallisation event, and,
one or more nucleation agent(s) which act to reduce subcooling in a second crystallisation event,
wherein the at least one salt comprises a 1 + halide; the one or more nucleation agent(s) for the first crystallisation event is selected from calcium carbonate, silicon dioxide, aluminium oxide, iron oxide and silver iodide; and the one or more nucleation agent(s) for the second crystallisation event is selected from silicon carbide and phyllosilicate materials; or
wherein the at least one salt comprises a 2+ halide; the one or more nucleation agent(s) for the first crystallisation event is selected from calcium carbonate, silicon dioxide, aluminium oxide, iron oxide and titanium dioxide; and, the one or more nucleation agent(s) for the second crystallisation event is selected from silicon carbide, vermiculite and silver iodide; or
wherein the at least one salt comprises a sulfate; the one or more nucleation agent(s) for the first crystallisation event is selected from silicon dioxide, aluminium oxide, iron oxide and titanium dioxide; and, the one or more nucleation agent(s) for the second crystallisation event is selected from silicon carbide and calcium carbonate; or
wherein the at least one salt comprises a nitrate; the one or more nucleation agent(s) for the first crystallisation event is selected from calcium carbonate, silicon dioxide, aluminium oxide, iron oxide and titanium dioxide; and the one or more nucleation agent(s) for the second crystallisation event is selected from silicon carbide, vermiculite and silver iodide; or
wherein the at least one salt comprises a carboxylate the one or more nucleation agent(s) for the first crystallisation event is selected from calcium carbonate, silicon dioxide, aluminium oxide and iron oxide; and, the one or more nucleation agent(s) for the second crystallisation event is selected from silicon carbide, vermiculite, silver iodide and titanium dioxide.

2. A PCM according to claim 1, wherein the at least one salt is:
a salt of one or more of group I metals, group II metals and/or ammonium salts thereof; or
one or more selected from 1+ halide, 2+ halide, sulfate, nitrate and/or carboxylate salt of a group I metal and/or group II metal.

3. A PCM according to claim 1, wherein the salt(s) is/are comprised of:
at least one or a combination of cations selected from any one of or combination of the following:
Lithium;
Sodium;
Potassium;
Calcium;
Magnesium;
Strontium; and/or
Ammonium
and at least one or a combination of anions selected from:
Chloride;
Bromide;
Sulfate;
Nitrate;
Formate; and/or
Acetate; or
wherein the PCM is comprised of one or more salt(s) selected from any one of or combination of the following:
Between 0 and 10 wt.% sodium sulfate;
Between 0 and 30 wt.% magnesium sulfate;
Between 0 and 40 wt.% magnesium nitrate;
Between 0 and 50 wt.% sodium nitrate;
Between 0 and 35 wt.% lithium nitrate;
Between 0 and 30 wt.% strontium chloride;
Between 0 and 50 wt.% strontium bromide;
Between 0 and 50 wt.% sodium bromide;
Between 0 and 25 wt.% sodium chloride;
Between 0 and 25 wt.% ammonium chloride;
Between 0 and 30 wt.% potassium chloride;
Between 0 and 15 wt.% sodium-potassium tartrate;
Between 0 and 40 wt.% sodium acetate, and/or Between 0 and 35 wt. sodium formate,
with the remainder of each composition being water; or
wherein the PCM is comprised of one or more salt(s) selected from any one of or combination of the following:
Between 3 and 6 wt.% sodium sulfate;
Between 14 and 25 wt.% magnesium sulfate;
Between 25 and 35 wt.% magnesium nitrate;
Between 30 and 40 wt.% sodium nitrate;
Between 20 and 30 wt.% lithium nitrate;
Between 15 and 25 wt.% strontium chloride;
Between 35 and 46 wt.% strontium bromide;
Between 34 and 45 wt.% sodium bromide;
Between 15 and 25 wt.% sodium chloride;
Between 14 and 25 wt.% ammonium chloride;
Between 15 and 25 wt.% potassium chloride;
Between 5 and 15 wt.% sodium-potassium tartrate;
Between 18 and 30 wt.% sodium acetate, and/or
Between 19 and 30 wt.% sodium formate,
with the remainder of each composition being water; or

4. A PCM according to claim 1, wherein the PCM is comprised of one or more salt(s) selected from one or more of:
About 4 wt.% sodium sulfate;
About 19 wt.% magnesium sulfate;
About 20 wt.% potassium chloride;
About 19 wt.% ammonium chloride;
About 24 wt.% sodium formate;
About 20 wt.% strontium chloride;
About 35 wt.% sodium nitrate;
About 23 wt.% sodium acetate;
About 27 wt.% sodium acetate;
About 22 wt.% sodium chloride;
About 25 wt.% lithium nitrate;
About 39 wt.% sodium bromide;
About 41 wt.% strontium bromide, or
About 30 wt.% magnesium nitrate,
with the remainder of each composition being water.

5. A PCM according to claim 1, wherein, on cooling, the first crystallisation event nucleates at a temperature between 0 and about 10 °C, between 0 and about 5 °C, or between 0 and about 3 °C below the melting temperature of the PCM; or wherein, on cooling, the second crystallisation event nucleates at a temperature between 0 °C and about 20 °C, between 0 and about 10 °C, or between 0 and about 5 °C below the melting temperature of the PCM; or
wherein, on cooling, the first crystallisation event nucleates at a temperature between 0 °C and about 10 °C below the melting temperature of the PCM, followed by nucleation of the second crystallisation event at a temperature below about 3 °C below the melting temperature of the PCM.

6. A PCM according to claim 1, wherein one of:
a plurality of nucleation agents is used to nucleate both crystallisation events; or
one of the crystallisation events is a solid-solid or polymorphic phase transition.

7. A PCM according to claim 1, wherein the nucleation agent is present at a loading of at least 0.01 wt.%, at least 0.1 wt.%, at least 1 wt.%, at least 5 wt.%, or at least 10 wt.%.

8. A PCM according to claim 1, where the PCM volume is more than 1L, more than 10 L, more than 20L, more than 100L, more than 200L, or more than 1000L.

9. A PCM according to claim 1, wherein aluminium oxide is used as a nucleation agent for the first crystallisation event, and the salt is selected from a group comprising any one of or combination of the following:
Magnesium sulfate
Potassium chloride
Ammonium chloride
Strontium chloride
Sodium chloride
Sodium bromide; and
Magnesium nitrate.

10. A PCM according to claim 1, wherein calcium carbonate is used as a nucleation agent for the first crystallisation event, and the salt is selected from a group comprising any one of or combination of the following:
Sodium potassium tartrate
Ammonium chloride
Sodium nitrate
Sodium formate
Sodium acetate
Sodium chloride
Sodium bromide; and
Strontium bromide.

11. A PCM according to claim 1, wherein silicon dioxide is used as a nucleation agent for the first crystallisation event, and the salt is selected from a group comprising any one of or combination of the following:
Sodium acetate and
Magnesium nitrate.

12. A PCM according to claim 1, wherein silver iodide is used as a nucleation agent for the first crystallisation event, and the salt is selected from a group comprising any one of or combination of the following:
Ammonium chloride; and
Sodium bromide.

13. A PCM according to claim 1, wherein titanium dioxide is used as a nucleation agent for the first crystallisation event, and the salt is magnesium sulfate.

14. A PCM according to claim 1, wherein iron oxide is used as a nucleation agent for the first crystallisation event, and the salt is selected from a group comprising any one of or combination of the following:
Sodium nitrate
Sodium acetate; and
Lithium nitrate.

15. A PCM according to claim 1, wherein silicon carbide is used as a nucleation agent for the second crystallisation event, and the salt is selected from a group comprising any one of or combination of the following:
Sodium sulfate
Sodium potassium tartrate
Magnesium sulfate
Ammonium chloride
Sodium formate
Strontium chloride
Sodium nitrate
Sodium acetate
Sodium chloride
Lithium nitrate
Sodium bromide; and
Magnesium nitrate.

16. A PCM according to claim 1, wherein silver iodide is used as a nucleation agent for the second crystallisation event, and the salt is selected from a group comprising any one of or combination of the following:
Sodium formate
Sodium nitrate
Strontium chloride; and
Strontium bromide.

17. A PCM according to claim 1, wherein vermiculite is used as a nucleation agent for the second crystallisation event, and the salt is selected from a group comprising any one of or combination of the following:
Potassium chloride
Ammonium chloride
Sodium formate
Strontium chloride
Sodium nitrate
Sodium acetate
Sodium chloride
Lithium nitrate
Sodium bromide; and
Magnesium nitrate.

18. A PCM according to claim 1, wherein calcium carbonate is used as a nucleation agent for the second crystallisation event, and the salt is magnesium sulfate.

19. A PCM according to claim 1, wherein the PCM comprises about 15-25 wt.% ammonium chloride in water, with the nucleation agent for the first crystallisation event comprising about 0.1-1.0 wt.% silver iodide and the nucleation agent for the second crystallisation event comprising about 0.1-1.0 wt.% vermiculite and/or silicon carbide; and optionally
wherein the PCM comprises about 18.6 wt.% ammonium chloride in water, with the nucleation agent for the first crystallisation event comprising about 0.5 wt.% silver iodide and the nucleation agent for the second crystallisation event comprising about 0.5 wt.% vermiculite and/or silicon carbide.

20. A PCM according to claim 1, wherein the PCM comprises about 18-30 wt.% sodium formate in water, with the nucleation agent for the first crystallisation event comprising about 0.1-1.0 wt.% calcium carbonate and the nucleation agent for the second crystallisation event comprising about 0.1-1.0 wt.% vermiculite; and optionally
wherein the PCM comprises about 24 wt.% sodium formate in water, with the nucleation agent for the first crystallisation event comprising about 0.5 wt.% calcium carbonate and the nucleation agent for the second crystallisation event comprising about 0.5 wt.% vermiculite.

21. A PCM according to claim 1, wherein the PCM comprises about 15-25 wt.% strontium chloride in water, with the nucleation agent for the first crystallisation event comprising about 0.1-1.0 wt.% aluminium oxide and the nucleation agent for the second crystallisation event comprising about 0.1-1.0 wt.% vermiculite and/or silver iodide; and optionally
wherein the PCM comprises about 19.5 wt.% strontium chloride in water, with the nucleation agent for the first crystallisation event comprising about 0.5 wt.% aluminium oxide and the nucleation agent for the second crystallisation event comprising about 0.5 wt.% vermiculite and/or silver iodide.

22. A PCM according to claim 1, wherein the PCM comprises about 30-40 wt.% sodium nitrate in water, with the nucleation agent for the first crystallisation event comprising about 0.1-1.0 wt.% iron oxide and/or silica and the nucleation agent for the second crystallisation event comprising about 0.1-1.0 wt.% vermiculite; and optionally
wherein the PCM comprises about 35 wt.% sodium nitrate in water, with the nucleation agent for the first crystallisation event comprising about 0.5 wt.% iron oxide and/or silica and the nucleation agent for the second crystallisation event comprising about 0.5 wt.% vermiculite.

23. A PCM according to claim 1, wherein the PCM comprises about 15- 30 wt.% sodium acetate in water, with the nucleation agent for the first crystallisation event comprising about 0.1-1.0 wt.% calcium carbonate and the nucleation agent for the second crystallisation event comprising about 0.1-1.0 wt.% silver iodide; and optionally
wherein the PCM comprises about 22.7 wt.% sodium acetate in water, with the nucleation agent for the first crystallisation event comprising about 0.5 wt.% calcium carbonate and the nucleation agent for the second crystallisation event comprising about 0.5 wt.% silver iodide.

24. A PCM according to claim 1, wherein the PCM comprises about 22-33.0 wt.% sodium acetate in water, with the nucleation agent for the first crystallisation event comprising about 0.1-1.0 wt.% calcium carbonate and the nucleation agent for the second crystallisation event comprising about 0.1-1.0 wt.% silver iodide; and optionally
wherein the PCM comprises about 27.0 wt.% sodium acetate in water, with the nucleation agent for the first crystallisation event comprising about 0.5 wt.% calcium carbonate and the nucleation agent for the second crystallisation event comprising about 0.5 wt.% silver iodide.

25. A PCM according to claim 1, wherein the PCM comprises about 18-27 wt.% sodium chloride in water, with the nucleation agent for the first crystallisation event comprising about 0.1-1.0 wt.% calcium carbonate and the nucleation agent for the second crystallisation event comprising about 0.1-1.0 wt.% vermiculite and/or silicon carbide; and optionally
wherein the PCM comprises about 22.4 wt.% sodium chloride in water, with the nucleation agent for the first crystallisation event comprising about 0.5 wt.% calcium carbonate and the nucleation agent for the second crystallisation event comprising about 0.5 wt.% vermiculite and/or silicon carbide.

26. A PCM according to claim 1, wherein the PCM comprises about 19-30 wt.% lithium nitrate in water, with the nucleation agent for the first crystallisation event comprising about 0.1-1.0 wt.% iron oxide and the nucleation agent for the second crystallisation event comprising about 0.1-1.0 wt.% silicon carbide; and optionally
wherein the PCM comprises about 24.5 wt.% lithium nitrate in water, with the nucleation agent for the first crystallisation event comprising about 0.5 wt.% iron oxide and the nucleation agent for the second crystallisation event comprising about 0.5 wt.% silicon carbide.

27. A PCM according to claim 1, wherein the PCM comprises about 34-45 wt.% sodium bromide in water, with the nucleation agent for the first crystallisation event comprising about 0.1-1.0 wt.% calcium carbonate and the nucleation agent for the second crystallisation event comprising about 0.1-1.0 wt.% silicon carbide; and optionally
wherein the PCM comprises about 39 wt.% sodium bromide in water, with the nucleation agent for the first crystallisation event comprising about 0.5 wt.% calcium carbonate and the nucleation agent for the second crystallisation event comprising about 0.5 wt.% silicon carbide.

28. A PCM according to claim 1, wherein the PCM comprises about 35-45 wt.% strontium bromide in water, with the nucleation agent for the first crystallisation event comprising about 0.1-1.0 wt.% calcium carbonate and the nucleation agent for the second crystallisation event comprising about 0.1-1.0 wt.% silver iodide; and optionally
wherein the PCM comprises about 41 wt.% strontium bromide in water, with the nucleation agent for the first crystallisation event comprising about 0.5 wt.% calcium carbonate and the nucleation agent for the second crystallisation event comprising about 0.5 wt.% silver iodide.

29. A PCM according to claim 1, wherein the PCM comprises about 25-35 wt.% magnesium nitrate in water, with the nucleation agent for the first crystallisation event comprising about 0.1-1.0 wt.% silicon dioxide and/or aluminium oxide and the nucleation agent for the second crystallisation event comprising about 0.1-1.0 wt.% silicon carbide; and optionally
wherein the PCM comprises about 30 wt.% magnesium nitrate in water, with the nucleation agent for the first crystallisation event comprising about 0.5 wt.% silicon dioxide and/or aluminium oxide and the nucleation agent for the second crystallisation event comprising about 0.5 wt.% silicon carbide.

## Patentansprüche

1. Salzwasser-eutektisches Phasenumwandlungsmaterial (PCM) mit einem Schmelzpunkt unter 0 °C, das zumindest zwei Kristallisationsereignisse beim Abkühlen zeigt, umfassend:
zumindest ein Salz;
Wasser; und
ein oder mehrere Nukleierungsmittel, die wirken, um Unterkühlung in einem ersten Kristallisationsereignis zu reduzieren, und
ein oder mehrere Nukleierungsmittel, die wirken, um Unterkühlung in einem zweiten Kristallisationsereignis zu reduzieren,
wobei das zumindest eine Salz ein 1+-Halogenid umfasst; das eine oder die mehreren Nukleierungsmittel für das erste Kristallisationsereignis ausgewählt sind aus Calciumcarbonat, Siliziumdioxid, Aluminiumoxid, Eisenoxid und Silberiodid; und das eine oder die mehreren Nukleierungsmittel für das zweite Kristallisationsereignis ausgewählt sind aus Siliziumcarbid und Schichtsilikatmaterialien; oder
wobei das zumindest eine Salz ein 2+-Halogenid umfasst; das eine oder die mehreren Nukleierungsmittel für das erste Kristallisationsereignis ausgewählt sind aus Calciumcarbonat, Siliziumdioxid, Aluminiumoxid, Eisenoxid und Titandioxid; und das eine oder die mehreren Nukleierungsmittel für das zweite Kristallisationsereignis ausgewählt sind aus Siliziumcarbid, Vermiculit und Silberiodid; oder
wobei das zumindest eine Salz ein Sulfat umfasst; das eine oder die mehreren Nukleierungsmittel für das erste Kristallisationsereignis ausgewählt sind aus Siliziumdioxid, Aluminiumoxid, Eisenoxid und Titandioxid; und das eine oder die mehreren Nukleierungsmittel für das zweite Kristallisationsereignis ausgewählt sind aus Siliziumcarbid und Calciumcarbonat; oder
wobei das zumindest eine Salz ein Nitrat umfasst; das eine oder die mehreren Nukleierungsmittel für das erste Kristallisationsereignis ausgewählt sind aus Calciumcarbonat, Siliziumdioxid, Aluminiumoxid, Eisenoxid und Titandioxid; und das eine oder die mehreren Nukleierungsmittel für das zweite Kristallisationsereignis ausgewählt sind aus Siliziumcarbid, Vermiculit und Silberiodid; oder
wobei das zumindest eine Salz ein Carboxylat umfasst, das eine oder die mehreren Nukleierungsmittel für das erste Kristallisationsereignis ausgewählt sind aus Calciumcarbonat, Siliziumdioxid, Aluminiumoxid und Eisenoxid; und das eine oder die mehreren Nukleierungsmittel für das zweite Kristallisationsereignis ausgewählt sind aus Siliziumcarbid, Vermiculit, Silberiodid und Titandioxid.

2. PCM nach Anspruch 1, wobei das zumindest eine Salz wie folgt ist:
ein Salz von einem oder mehreren von Metallen der Gruppe I, Metallen der Gruppe II und/oder Ammoniumsalzen davon; oder
eines oder mehrere ausgewählt aus 1+-Halogenid, 2+-Halogenid, Sulfat, Nitrat und/oder Carboxylatsalz eines Metalls der Gruppe I und/oder Metalls der Gruppe II.

3. PCM nach Anspruch 1, wobei das/die Salz(e) Folgendes umfasst/umfassen:
zumindest ein oder eine Kombination von Kationen ausgewählt aus einem beliebigen oder einer Kombination des Folgenden:
Lithium;
Natrium;
Kalium;
Calcium;
Magnesium;
Strontium; und/oder
Ammonium
und zumindest ein oder eine Kombination von Anionen ausgewählt aus:
Chlorid;
Bromid;
Sulfat;
Nitrat;
Formiat; und/oder
Acetat; oder
wobei das PCM ein oder mehrere Salz(e) ausgewählt aus einem beliebigen von oder einer Kombination des Folgenden umfasst:
zwischen 0 und 10 Gew.-% Natriumsulfat;
zwischen 0 und 30 Gew.-% Magnesiumsulfat;
zwischen 0 und 40 Gew.-% Magnesiumnitrat;
zwischen 0 und 50 Gew.-% Natriumnitrat;
zwischen 0 und 35 Gew.-% Lithiumnitrat;
zwischen 0 und 30 Gew.-% Strontiumchlorid;
zwischen 0 und 50 Gew.-% Strontiumbromid;
zwischen 0 und 50 Gew.-% Natriumbromid;
zwischen 0 und 25 Gew.-% Natriumchlorid;
zwischen 0 und 25 Gew.-% Ammoniumchlorid;
zwischen 0 und 30 Gew.-% Kaliumchlorid;
zwischen 0 und 15 Gew.-% Natriumkaliumtartrat;
zwischen 0 und 40 Gew.-% Natriumacetat, und/oder
zwischen 0 und 35 Gew.-% Natriumformiat,
wobei der Rest jeder Zusammensetzung Wasser ist; oder
wobei das PCM ein oder mehrere Salz(e) ausgewählt aus einem beliebigen von oder einer Kombination des Folgenden umfasst:
zwischen 3 und 6 Gew.-% Natriumsulfat;
zwischen 14 und 25 Gew.-% Magnesiumsulfat;
zwischen 25 und 35 Gew.-% Magnesiumnitrat;
zwischen 30 und 40 Gew.-% Natriumnitrat;
zwischen 20 und 30 Gew.-% Lithiumnitrat;
zwischen 15 und 25 Gew.-% Strontiumchlorid;
zwischen 35 und 46 Gew.-% Strontiumbromid;
zwischen 34 und 45 Gew.-% Natriumbromid;
zwischen 15 und 25 Gew.-% Natriumchlorid;
zwischen 14 und 25 Gew.-% Ammoniumchlorid;
zwischen 15 und 25 Gew.-% Kaliumchlorid;
zwischen 5 und 15 Gew.-% Natriumkaliumtartrat;
zwischen 18 und 30 Gew.-% Natriumacetat, und/oder
zwischen 19 und 30 Gew.-% Natriumformiat,
wobei der Rest jeder Zusammensetzung Wasser ist; oder.

4. PCM nach Anspruch 1, wobei das PCM ein oder mehrere Salz(e) ausgewählt aus einem oder mehreren des Folgenden umfasst:
etwa 4 Gew.-% Natriumsulfat;
etwa 19 Gew.-% Magnesiumsulfat;
etwa 20 Gew.-% Kaliumchlorid;
etwa 19 Gew.-% Ammoniumchlorid;
etwa 24 Gew.-% Natriumformiat;
etwa 20 Gew.-% Strontiumchlorid;
etwa 35 Gew.-% Natriumnitrat;
etwa 23 Gew.-% Natriumacetat;
etwa 27 Gew.-% Natriumacetat;
etwa 22 Gew.-% Natriumchlorid;
etwa 25 Gew.-% Lithiumnitrat;
etwa 39 Gew.-% Natriumbromid;
etwa 41 Gew.-% Strontiumbromid, oder
etwa 30 Gew.-% Magnesiumnitrat,
wobei der Rest jeder Zusammensetzung Wasser ist.

5. PCM nach Anspruch 1, wobei beim Abkühlen das erste Kristallisationsereignis bei einer Temperatur zwischen 0 und etwa 10 °C, zwischen 0 und etwa 5 °C oder zwischen 0 und etwa 3 °C unter der Schmelztemperatur des PCM nukleiert; oder wobei beim Abkühlen das zweite Kristallisationsereignis bei einer Temperatur zwischen 0 °C und etwa 20 °C, zwischen 0 und etwa 10 °C oder zwischen 0 und etwa 5 °C unter der Schmelztemperatur des PCM nukleiert; oder wobei beim Abkühlen das erste Kristallisationsereignis bei einer Temperatur zwischen 0 °C und etwa 10 °C unter der Schmelztemperatur des PCM nukleiert, gefolgt von Nukleierung des zweiten Kristallisationsereignisses bei einer Temperatur unter etwa 3 °C unter der Schmelztemperatur des PCM.

6. PCM nach Anspruch 1, wobei eines von Folgendem gilt:
eine Vielzahl von Nukleierungsmitteln wird verwendet, um beide Kristallisationsereignisse zu nukleieren; oder
eines der Kristallisationsereignisse ist ein Fest-Fest- oder polymorpher Phasenübergang.

7. PCM nach Anspruch 1, wobei das Nukleierungsmittel in einer Beladung von zumindest 0,01 Gew.-%, zumindest 0,1 Gew.-%, zumindest 1 Gew.-%, zumindest 5 Gew.-% oder zumindest 10 Gew.-% vorhanden ist.

8. PCM nach Anspruch 1, wobei das PCM-Volumen mehr als 1 1, mehr als 10 1, mehr als 20 1, mehr als 100 1, mehr als 200 1 oder mehr als 1000 1 ist.

9. PCM nach Anspruch 1, wobei Aluminiumoxid als Nukleierungsmittel für das erste Kristallisationsereignis verwendet wird und das Salz ausgewählt ist aus einer Gruppe, die ein beliebiges oder eine Kombination des Folgenden umfasst:
Magnesiumsulfat
Kaliumchlorid
Ammoniumchlorid
Strontiumchlorid
Natriumchlorid
Natriumbromid; und
Magnesiumnitrat.

10. PCM nach Anspruch 1, wobei Calciumcarbonat als Nukleierungsmittel für das erste Kristallisationsereignis verwendet wird und das Salz ausgewählt ist aus einer Gruppe, die ein beliebiges oder eine Kombination des Folgenden umfasst:
Natriumkaliumtartrat
Ammoniumchlorid
Natriumnitrat
Natriumformiat
Natriumacetat
Natriumchlorid
Natriumbromid; und
Strontiumbromid.

11. PCM nach Anspruch 1, wobei Siliziumdioxid als Nukleierungsmittel für das erste Kristallisationsereignis verwendet wird und das Salz ausgewählt ist aus einer Gruppe, die ein beliebiges oder eine Kombination des Folgenden umfasst:
Natriumacetat, und
Magnesiumnitrat.

12. PCM nach Anspruch 1, wobei Silberiodid als Nukleierungsmittel für das erste Kristallisationsereignis verwendet wird und das Salz ausgewählt ist aus einer Gruppe, die ein beliebiges oder eine Kombination des Folgenden umfasst:
Ammoniumchlorid; und
Natriumbromid.

13. PCM nach Anspruch 1, wobei Titandioxid als Nukleierungsmittel für das erste Kristallisationsereignis verwendet wird und das Salz Magnesiumsulfat ist.

14. PCM nach Anspruch 1, wobei Eisenoxid als Nukleierungsmittel für das erste Kristallisationsereignis verwendet wird und das Salz ausgewählt ist aus einer Gruppe, die ein beliebiges oder eine Kombination des Folgenden umfasst:
Natriumnitrat
Natriumacetat; und
Lithiumnitrat.

15. PCM nach Anspruch 1, wobei Siliziumcarbid als Nukleierungsmittel für das zweite Kristallisationsereignis verwendet wird und das Salz ausgewählt ist aus einer Gruppe, die ein beliebiges oder eine Kombination des Folgenden umfasst:
Natriumsulfat
Natriumkaliumtartrat
Magnesiumsulfat
Ammoniumchlorid
Natriumformiat
Strontiumchlorid
Natriumnitrat
Natriumacetat
Natriumchlorid
Lithiumnitrat
Natriumbromid; und
Magnesiumnitrat.

16. PCM nach Anspruch 1, wobei Silberiodid als Nukleierungsmittel für das zweite Kristallisationsereignis verwendet wird und das Salz ausgewählt ist aus einer Gruppe, die ein beliebiges oder eine Kombination des Folgenden umfasst:
Natriumformiat
Natriumnitrat
Strontiumchlorid; und
Strontiumbromid.

17. PCM nach Anspruch 1, wobei Vermiculit als Nukleierungsmittel für das zweite Kristallisationsereignis verwendet wird und das Salz ausgewählt ist aus einer Gruppe, die ein beliebiges oder eine Kombination des Folgenden umfasst:
Kaliumchlorid
Ammoniumchlorid
Natriumformiat
Strontiumchlorid
Natriumnitrat
Natriumacetat
Natriumchlorid
Lithiumnitrat
Natriumbromid; und
Magnesiumnitrat.

18. PCM nach Anspruch 1, wobei Calciumcarbonat als Nukleierungsmittel für das zweite Kristallisationsereignis verwendet wird und das Salz Magnesiumsulfat ist.

19. PCM nach Anspruch 1, wobei das PCM etwa 15-25 Gew.-% Ammoniumchlorid in Wasser umfasst, wobei das Nukleierungsmittel für das erste Kristallisationsereignis etwa 0,1-1,0 Gew.-% Silberiodid umfasst und das Nukleierungsmittel für das zweite Kristallisationsereignis etwa 0,1-1,0 Gew.-% Vermiculit und/oder Siliziumcarbid umfasst; und optional
wobei das PCM etwa 18,6 Gew.-% Ammoniumchlorid in Wasser umfasst, wobei das Nukleierungsmittel für das erste Kristallisationsereignis etwa 0,5 Gew.-% Silberiodid umfasst und das Nukleierungsmittel für das zweite Kristallisationsereignis etwa 0,5 Gew.-% Vermiculit und/oder Siliziumcarbid umfasst.

20. PCM nach Anspruch 1, wobei das PCM etwa 18-30 Gew.-% Natriumformiat in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Vermiculit umfasst; und optional
wobei das PCM etwa 24 Gew.-% Natriumformiat in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Vermiculit umfasst.

21. PCM nach Anspruch 1, wobei das PCM etwa 15-25 Gew.-% Strontiumchlorid in Wasser umfasst, wobei das Nukleierungsmittel für das erste Kristallisationsereignis etwa 0,1-1,0 Gew.-% Aluminiumoxid umfasst und das Nukleierungsmittel für das zweite Kristallisationsereignis etwa 0,1-1,0 Gew.-% Vermiculit und/oder Silberiodid umfasst; und optional
wobei das PCM etwa 19,5 Gew.-% Strontiumchlorid in Wasser umfasst, wobei das Nukleierungsmittel für das erste Kristallisationsereignis etwa 0,5 Gew.-% Aluminiumoxid umfasst und das Nukleierungsmittel für das zweite Kristallisationsereignis etwa 0,5 Gew.-% Vermiculit und/oder Silberiodid umfasst.

22. PCM nach Anspruch 1, wobei das PCM etwa 30-40 Gew.-% Natriumnitrat in Wasser umfasst, wobei das Nukleierungsmittel für das erste Kristallisationsereignis etwa 0,1-1,0 Gew.-% Eisenoxid und/oder Silikat umfasst und das Nukleierungsmittel für das zweite Kristallisationsereignis etwa 0,1-1,0 Gew.-% Vermiculit umfasst; und optional
wobei das PCM etwa 35 Gew.-% Natriumnitrat in Wasser umfasst, wobei das Nukleierungsmittel für das erste Kristallisationsereignis etwa 0,5 Gew.-% Eisenoxid und/oder Silikat umfasst und das Nukleierungsmittel für das zweite Kristallisationsereignis etwa 0,5 Gew.-% Vermiculit umfasst.

23. PCM nach Anspruch 1, wobei das PCM etwa 15-30 Gew.-% Natriumacetat in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Silberiodid umfasst; und optional
wobei das PCM etwa 22,7 Gew.-% Natriumacetat in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Silberiodid umfasst.

24. PCM nach Anspruch 1, wobei das PCM etwa 22-33,0 Gew.-% Natriumacetat in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Silberiodid umfasst; und optional
wobei das PCM etwa 27,0 Gew.-% Natriumacetat in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Silberiodid umfasst.

25. PCM nach Anspruch 1, wobei das PCM etwa 18-27 Gew.-% Natriumchlorid in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Vermiculit und/oder Siliziumcarbid umfasst; und optional
wobei das PCM etwa 22,4 Gew.-% Natriumchlorid in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Vermiculit und/oder Siliziumcarbid umfasst.

26. PCM nach Anspruch 1, wobei das PCM etwa 19-30 Gew.-% Lithiumnitrat in Wasser umfasst, wobei das Nukleierungsmittel für das erste Kristallisationsereignis etwa 0,1-1,0 Gew.-% Eisenoxid umfasst und das Nukleierungsmittel für das zweite Kristallisationsereignis etwa 0,1-1,0 Gew.-% Siliziumcarbid umfasst; und optional
wobei das PCM etwa 24,5 Gew.-% Lithiumnitrat in Wasser umfasst, wobei das Nukleierungsmittel für das erste Kristallisationsereignis etwa 0,5 Gew.-% Eisenoxid umfasst und das Nukleierungsmittel für das zweite Kristallisationsereignis etwa 0,5 Gew.-% Siliziumcarbid umfasst.

27. PCM nach Anspruch 1, wobei das PCM etwa 34-45 Gew.-% Natriumbromid in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Siliziumcarbid umfasst; und optional
wobei das PCM etwa 39 Gew.-% Natriumbromid in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Siliziumcarbid umfasst.

28. PCM nach Anspruch 1, wobei das PCM etwa 35-45,0 Gew.-% Strontiumbromid in Wasser umfasst, wobei das Nukleierungsmittel für das erste Kristallisationsereignis etwa 0,1-1,0 Gew.-% Calciumcarbonat umfasst und das Nukleierungsmittel für das zweite Kristallisationsereignis etwa 0,1-1,0 Gew.-% Silberiodid umfasst; und optional
wobei das PCM etwa 41 Gew.-% Strontiumbromid in Wasser umfasst, wobei das Nukleierungsmittel für das erste Kristallisationsereignis etwa 0,5 Gew.-% Calciumcarbonat umfasst und das Nukleierungsmittel für das zweite Kristallisationsereignis etwa 0,5 Gew.-% Silberiodid umfasst.

29. PCM nach Anspruch 1, wobei das PCM etwa 25-35 Gew.-% Magnesiumnitrat in Wasser umfasst, wobei das Nukleierungsmittel für das erste Kristallisationsereignis etwa 0,1-1,0 Gew.-% Siliziumdioxid und/oder Aluminiumoxid umfasst und das Nukleierungsmittel für das zweite Kristallisationsereignis etwa 0,1-1,0 Gew.-% Siliziumcarbid umfasst; und optional
wobei das PCM etwa 30 Gew.-% Magnesiumnitrat in Wasser umfasst, wobei das Nukleierungsmittel für das erste Kristallisationsereignis etwa 0,5 Gew.-% Siliziumdioxid und/oder Aluminiumoxid umfasst und das Nukleierungsmittel für das zweite Kristallisationsereignis etwa 0,5 Gew.-% Siliziumcarbid umfasst.

## Revendications

1. Matériau à changement de phase (MCP) eutectique sel-eau ayant un point de fusion inférieur à 0 °C qui présente au moins deux événements de cristallisation lors du refroidissement, constitués de :
au moins un sel ;
de l'eau ; et
un ou plusieurs agents de nucléation qui agissent pour réduire le sousrefroidissement lors d'un premier événement de cristallisation, et,
un ou plusieurs agents de nucléation qui agissent pour réduire le sousrefroidissement lors d'un second événement de cristallisation,
dans lequel ledit au moins un sel comprend un halogénure 1+ ; le ou les agents de nucléation pour le premier événement de cristallisation sont choisis parmi le carbonate de calcium, le dioxyde de silicium, l'oxyde d'aluminium, l'oxyde de fer et l'iodure d'argent ; et le ou les agents de nucléation pour le second événement de cristallisation sont choisis parmi les matériaux de carbure de silicium et de phyllosilicate ; ou
dans lequel l'au moins un sel comprend un halogénure 2+ ; le ou les agents de nucléation pour le premier événement de cristallisation sont choisis parmi le carbonate de calcium, le dioxyde de silicium, l'oxyde d'aluminium, l'oxyde de fer et le dioxyde de titane ; et le ou les agents de nucléation pour le second événement de cristallisation sont choisis parmi le carbure de silicium, la vermiculite et l'iodure d'argent ; ou
dans lequel l'au moins un sel comprend un sulfate ; le ou les agents de nucléation pour le premier événement de cristallisation sont choisis parmi le dioxyde de silicium, l'oxyde d'aluminium, l'oxyde de fer et le dioxyde de titane ; et le ou les agents de nucléation pour le second événement de cristallisation sont choisis parmi le carbure de silicium et le carbonate de calcium ; ou
dans lequel l'au moins un sel comprend un nitrate ; le ou les agents de nucléation pour le premier événement de cristallisation sont choisis parmi le carbonate de calcium, le dioxyde de silicium, l'oxyde d'aluminium, l'oxyde de fer et le dioxyde de titane ; et le ou les agents de nucléation pour le second événement de cristallisation sont choisis parmi le carbure de silicium, la vermiculite et l'iodure d'argent ; ou
dans lequel l'au moins un sel comprend un carboxylate, le ou les agents de nucléation pour le premier événement de cristallisation sont choisis parmi le carbonate de calcium, le dioxyde de silicium, l'oxyde d'aluminium et l'oxyde de fer ; et le ou les agents de nucléation pour le second événement de cristallisation sont choisis parmi le carbure de silicium, la vermiculite, l'iodure d'argent et le dioxyde de titane.

2. MCP selon la revendication 1, dans lequel l'au moins un sel est :
un sel d'un ou de plusieurs métaux du groupe I, métaux du groupe II et/ou des sels d'ammonium de ceux-ci ; ou
un ou plusieurs sels choisis parmi un halogénure 1+, un halogénure 2+, un sulfate, un nitrate et/ou un carboxylate d'un métal du groupe I et/ou d'un métal du groupe II.

3. MCP selon la revendication 1, dans lequel le ou les sels sont constitués de :
au moins un cation ou une combinaison de cations choisis parmi l'un quelconque des suivants ou une combinaison de ceux-ci :
Lithium ;
Sodium ;
Potassium ;
Calcium ;
Magnésium ;
Strontium ; et/ou
Ammonium
et au moins un anion ou une combinaison d'anions choisis parmi :
Chlorure ;
Bromure ;
Sulfate ;
Nitrate ;
Formiate ; et/ou
Acétate ; ou
ledit MCP étant constitué d'un ou de plusieurs sels choisis parmi l'un quelconque des suivants ou une combinaison de ceux-ci :
Entre 0 et 10 % en poids de sulfate de sodium ;
Entre 0 et 30 % en poids de sulfate de magnésium ;
Entre 0 et 40 % en poids de nitrate de magnésium ;
Entre 0 et 50 % en poids de nitrate de sodium ;
Entre 0 et 35 % en poids de nitrate de lithium ;
Entre 0 et 30 % en poids de chlorure de strontium ;
Entre 0 et 50 % en poids de bromure de strontium ;
Entre 0 et 50 % en poids de bromure de sodium ;
Entre 0 et 25 % en poids de chlorure de sodium ;
Entre 0 et 25 % en poids de chlorure d'ammonium ;
Entre 0 et 30 % en poids de chlorure de potassium ;
Entre 0 et 15 % en poids de tartrate de sodium et de potassium ;
Entre 0 et 40 % en poids d'acétate de sodium, et/ou
Entre 0 et 35 en poids de formiate de sodium,
le reste de chaque composition étant de l'eau ; ou
ledit MCP étant constitué d'un ou de plusieurs sels choisis parmi l'un quelconque des suivants ou une combinaison de ceux-ci :
Entre 3 et 6 % en poids de sulfate de sodium ;
Entre 14 et 25 % en poids de sulfate de magnésium ;
Entre 25 et 35 % en poids de nitrate de magnésium ;
Entre 30 et 40 % en poids de nitrate de sodium ;
Entre 20 et 30 % en poids de nitrate de lithium ;
Entre 15 et 25 % en poids de chlorure de strontium ;
Entre 35 et 46 % en poids de bromure de strontium ;
Entre 34 et 45 % en poids de bromure de sodium ;
Entre 15 et 25 % en poids de chlorure de sodium ;
Entre 14 et 25 % en poids de chlorure d'ammonium ;
Entre 15 et 25 % en poids de chlorure de potassium ;
Entre 5 et 15 % en poids de tartrate de sodium et de potassium ;
Entre 18 et 30 % en poids d'acétate de sodium, et/ou
Entre 19 et 30 % en poids de formiate de sodium,
le reste de chaque composition étant de l'eau ; ou.

4. MCP selon la revendication 1, ledit MCP étant constitué d'un ou de plusieurs sels choisis parmi un ou plusieurs des suivants :
Environ 4 % en poids de sulfate de sodium ;
Environ 19 % en poids de sulfate de magnésium ;
Environ 20 % en poids de chlorure de potassium ;
Environ 19 % en poids de chlorure d'ammonium ;
Environ 24 % en poids de formiate de sodium ;
Environ 20 % en poids de chlorure de strontium ;
Environ 35 % en poids de nitrate de sodium ;
Environ 23 % en poids d'acétate de sodium ;
Environ 27 % en poids d'acétate de sodium ;
Environ 22 % en poids de chlorure de sodium ;
Environ 25 % en poids de nitrate de lithium ;
Environ 39 % en poids de bromure de sodium ;
Environ 41 % en poids de bromure de strontium, ou
Environ 30 % en poids de nitrate de magnésium,
le reste de chaque composition étant de l'eau.

5. MCP selon la revendication 1, dans lequel, lors du refroidissement, la nucléation du premier événement de cristallisation s'effectue à une température entre 0 et environ 10 °C, entre 0 et environ 5 °C ou entre 0 et environ 3°C au-dessous de la température de fusion du MCP ; ou dans lequel, lors du refroidissement, la nucléation du second événement de cristallisation s'effectue à une température entre 0 °C et environ 20 °C, entre 0 et environ 10 °C ou entre 0 et environ 5 °C au-dessous de la température de fusion du MCP ; ou
dans lequel, lors du refroidissement, la nucléation du premier événement de cristallisation s'effectue à une température entre 0 °C et environ 10 °C au-dessous de la température de fusion du MCP, suivi par la nucléation du second événement de cristallisation à une température inférieure à environ 3 °C au-dessous de la température de fusion du MCP.

6. MCP selon la revendication 1, dans lequel l'un parmi :
une pluralité d'agents de nucléation est utilisée pour assurer la nucléation des deux événements de cristallisation ; ou l'un des événements de cristallisation est une transition de phase solide-solide ou polymorphe.

7. MCP selon la revendication 1, dans lequel l'agent de nucléation est présent à une charge d'au moins 0,01 % en poids, d'au moins 0,1 % en poids, d'au moins 1 % en poids, d'au moins 5 % en poids ou d'au moins 10 % en poids.

8. MCP selon la revendication 1, où le volume du MCP est supérieur à 1 L, supérieur à 10 L, supérieur à 20 L, supérieur à 100 L, supérieur à 200 L ou supérieur à 1000 L.

9. MCP selon la revendication 1, dans lequel l'oxyde d'aluminium est utilisé comme agent de nucléation pour le premier événement de cristallisation, et le sel est choisi dans un groupe comprenant l'un quelconque des suivants ou une combinaison de ceux-ci :
Sulfate de magnésium
Chlorure de potassium
Chlorure d'ammonium
Chlorure de strontium
Chlorure de sodium
Bromure de sodium ; et
Nitrate de magnésium.

10. MCP selon la revendication 1, dans lequel le carbonate de calcium est utilisé comme agent de nucléation pour le premier événement de cristallisation, et le sel est choisi dans un groupe comprenant l'un quelconque des suivants ou une combinaison de ceux-ci :
Tartrate de sodium et de potassium
Chlorure d'ammonium
Nitrate de sodium
Formiate de sodium
Acétate de sodium
Chlorure de sodium
Bromure de sodium ; et
Bromure de strontium.

11. MCP selon la revendication 1, dans lequel le dioxyde de silicium est utilisé comme agent de nucléation pour le premier événement de cristallisation, et le sel est choisi dans un groupe comprenant l'un quelconque des suivants ou une combinaison de ceux-ci :
Acétate de sodium et
Nitrate de magnésium.

12. MCP selon la revendication 1, dans lequel l'iodure d'argent est utilisé comme agent de nucléation pour le premier événement de cristallisation, et le sel est choisi dans un groupe comprenant l'un quelconque des suivants ou une combinaison de ceux-ci :
Chlorure d'ammonium ; et
Bromure de sodium.

13. MCP selon la revendication 1, dans lequel le dioxyde de titane est utilisé comme agent de nucléation pour le premier événement de cristallisation, et le sel est le sulfate de magnésium.

14. MCP selon la revendication 1, dans lequel l'oxyde de fer est utilisé comme agent de nucléation pour le premier événement de cristallisation, et le sel est choisi dans un groupe comprenant l'un quelconque des suivants ou une combinaison de ceux-ci :
Nitrate de sodium
Acétate de sodium ; et
Nitrate de lithium.

15. MCP selon la revendication 1, dans lequel le carbure de silicium est utilisé comme agent de nucléation pour le second événement de cristallisation, et le sel est choisi dans un groupe comprenant l'un quelconque des suivants ou une combinaison de ceux-ci :
Sulfate de sodium
Tartrate de sodium et de potassium
Sulfate de magnésium
Chlorure d'ammonium
Formiate de sodium
Chlorure de strontium
Nitrate de sodium
Acétate de sodium
Chlorure de sodium
Nitrate de lithium
Bromure de sodium ; et
Nitrate de magnésium.

16. MCP selon la revendication 1, dans lequel l'iodure d'argent est utilisé comme agent de nucléation pour le second événement de cristallisation, et le sel est choisi dans un groupe comprenant l'un quelconque des suivants ou une combinaison de ceux-ci :
Formiate de sodium
Nitrate de sodium
Chlorure de strontium ; et
Bromure de strontium.

17. MCP selon la revendication 1, dans lequel la vermiculite est utilisée comme agent de nucléation pour le second événement de cristallisation, et le sel est choisi dans un groupe comprenant l'un quelconque des suivants ou une combinaison de ceux-ci :
Chlorure de potassium
Chlorure d'ammonium
Formiate de sodium
Chlorure de strontium
Nitrate de sodium
Acétate de sodium
Chlorure de sodium
Nitrate de lithium
Bromure de sodium ; et
Nitrate de magnésium.

18. MCP selon la revendication 1, dans lequel le carbonate de calcium est utilisé comme agent de nucléation pour le second événement de cristallisation, et le sel est le sulfate de magnésium.

19. MCP selon la revendication 1, ledit MCP comprenant environ 15 à 25 % en poids de chlorure d'ammonium dans l'eau, l'agent de nucléation pour le premier événement de cristallisation comprenant environ 0,1 à 1,0 % en poids d'iodure d'argent et l'agent de nucléation pour le second événement de cristallisation comprenant environ 0,1 à 1,0 % en poids de vermiculite et/ou de carbure de silicium ; et éventuellement
ledit MCP comprenant environ 18,6 % en poids de chlorure d'ammonium dans l'eau, l'agent de nucléation pour le premier événement de cristallisation comprenant environ 0,5 % en poids d'iodure d'argent et l'agent de nucléation pour le second événement de cristallisation comprenant environ 0,5 % en poids de vermiculite et/ou de carbure de silicium.

20. MCP selon la revendication 1, ledit MCP comprenant environ 18 à 30 % en poids de formiate de sodium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids de vermiculite ; et éventuellement
ledit MCP comprenant environ 24 % en poids de formiate de sodium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids de vermiculite.

21. MCP selon la revendication 1, ledit MCP comprenant environ 15 à 25 % en poids de chlorure de strontium dans l'eau, l'agent de nucléation pour le premier événement de cristallisation comprenant environ 0,1 à 1,0 % en poids d'oxyde d'aluminium et l'agent de nucléation pour le second événement de cristallisation comprenant environ 0,1 à 1,0 % en poids de vermiculite et/ou d'iodure d'argent ; et éventuellement
ledit MCP comprenant environ 19,5 % en poids de chlorure de strontium dans l'eau, l'agent de nucléation pour le premier événement de cristallisation comprenant environ 0,5 % en poids d'oxyde d'aluminium et l'agent de nucléation pour le second événement de cristallisation comprenant environ 0,5 % en poids de vermiculite et/ou d'iodure d'argent.

22. MCP selon la revendication 1, ledit MCP comprenant environ 30 à 40 % en poids de nitrate de sodium dans l'eau, l'agent de nucléation pour le premier événement de cristallisation comprenant environ 0,1 à 1,0 % en poids d'oxyde de fer et/ou de silice et l'agent de nucléation pour le second événement de cristallisation comprenant environ 0,1 à 1,0 % en poids de vermiculite ; et éventuellement
ledit MCP comprenant environ 35 % en poids de nitrate de sodium dans l'eau, l'agent de nucléation pour le premier événement de cristallisation comprenant environ 0,5 % en poids d'oxyde de fer et/ou de silice et l'agent de nucléation pour le second événement de cristallisation comprenant environ 0,5 % en poids de vermiculite.

23. MCP selon la revendication 1, ledit MCP comprenant environ 15 à 30 % en poids d'acétate de sodium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids d'iodure d'argent ; et éventuellement
ledit MCP comprenant environ 22,7 % en poids d'acétate de sodium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids d'iodure d'argent.

24. MCP selon la revendication 1, ledit MCP comprenant environ 22 à 33,0 % en poids d'acétate de sodium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids d'iodure d'argent ; et éventuellement
ledit MCP comprenant environ 27,0 % en poids d'acétate de sodium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids d'iodure d'argent.

25. MCP selon la revendication 1, ledit MCP comprenant environ 18 à 27 % en poids de chlorure de sodium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids de vermiculite et/ou de carbure de silicium ; et éventuellement
ledit MCP comprenant environ 22,4 % en poids de chlorure de sodium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids de vermiculite et/ou de carbure de silicium.

26. MCP selon la revendication 1, ledit MCP comprenant environ 19 à 30 % en poids de nitrate de lithium dans l'eau, l'agent de nucléation pour le premier événement de cristallisation comprenant environ 0,1 à 1,0 % en poids d'oxyde de fer et l'agent de nucléation pour le second événement de cristallisation comprenant environ 0,1 à 1,0 % en poids de carbure de silicium ; et éventuellement
ledit MCP comprenant environ 24,5 % en poids de nitrate de lithium dans l'eau, l'agent de nucléation pour le premier événement de cristallisation comprenant environ 0,5 % en poids d'oxyde de fer et l'agent de nucléation pour le second événement de cristallisation comprenant environ 0,5 % en poids de carbure de silicium.

27. MCP selon la revendication 1, ledit MCP comprenant environ 34 à 45 % en poids de bromure de sodium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids de carbure de silicium ; et éventuellement
ledit MCP comprenant environ 39 % en poids de bromure de sodium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids de carbure de silicium.

28. MCP selon la revendication 1, ledit MCP comprenant environ 35 à 45 % en poids de bromure de strontium dans l'eau, l'agent de nucléation pour le premier événement de cristallisation comprenant environ 0,1 à 1,0 % en poids de carbonate de calcium et l'agent de nucléation pour le second événement de cristallisation comprenant environ 0,1 à 1,0 % en poids d'iodure d'argent ; et éventuellement
ledit MCP comprenant environ 41 % en poids de bromure de strontium dans l'eau, l'agent de nucléation pour le premier événement de cristallisation comprenant environ 0,5 % en poids de carbonate de calcium et l'agent de nucléation pour le second événement de cristallisation comprenant environ 0,5 % en poids d'iodure d'argent.

29. MCP selon la revendication 1, ledit MCP comprenant environ 25 à 35 % en poids de nitrate de magnésium dans l'eau, l'agent de nucléation pour le premier événement de cristallisation comprenant environ 0,1 à 1,0 % en poids de dioxyde de silicium et/ou d'oxyde d'aluminium et l'agent de nucléation pour le second événement de cristallisation comprenant environ 0,1 à 1,0 en poids de carbure de silicium ; et éventuellement
ledit MCP comprenant environ 30 % en poids de nitrate de magnésium dans l'eau, l'agent de nucléation pour le premier événement de cristallisation comprenant environ 0,5 % en poids de dioxyde de silicium et/ou d'oxyde d'aluminium et l'agent de nucléation pour le second événement de cristallisation comprenant environ 0,5 % en poids de carbure de silicium.
